# EUROPÄISCHE PATENTSCHRIFT

(11) **EP 3 401 839 B1**
(45) Veröffentlichungstag und Bekanntmachung des Hinweises auf die Patenterteilung: **03.11.2021**
(21) Anmeldenummer: 18170993.2
(22) Anmeldetag: 07.05.2018
(51) Int. Cl.: G06K 9/00

(54) **IDENTIFIZIEREN POTENTIELLER NUTZER PYROTECHNISCHER GEGENSTÄNDE**
IDENTIFYING POTENTIAL USERS OF PYROTECHNIC ARTICLES
IDENTIFICATION D'UTILISATEURS POTENTIELS DES OBJETS PYROTECHNIQUES

(30) Priorität: 08.05.2017 DE 102017207754
(43) Veröffentlichungstag der Anmeldung: 14.11.2018
(73) Patentinhaber: Bundesdruckerei GmbH, 10969 Berlin (DE); neXenio GmbH, 10117 Berlin (DE)
(72) Erfinder: SCHNJAKIN, Dr. Maxim, 10245 Berlin (DE); PAESCHKE, Dr. Manfred, 16348 Wandlitz (DE); DRESSEL, Olaf, 14641 Wustermark (DE); HENNIG, Patrick, 10437 Berlin (DE); BERGER, Philip, 10627 Berlin (DE); LICHT, Lucas, 12043 Berlin (DE)
(74) Vertreter: Richardt Patentanwälte PartG mbB

(56) Entgegenhaltungen:
- EP-A1- 3 312 762
- WO-A1-03/088157
- WO-A1-2015/153865
- US-A1- 2004 017 929

## Beschreibung

Die Erfindung betrifft ein Verfahren, ein elektronisches System und ein Servercomputersystem zum automatischen Identifizieren ein oder mehrerer potenzieller Nutzer eines pyrotechnischen Gegenstands in einer Veranstaltungsstätte.

In Veranstaltungsstätten mit großen Besucherzahlen, insbesondere bei Sportveranstaltungen, wie beispielsweise Fußballspielen, stellt die Nutzung pyrotechnischer Gegenstände durch Besucher auf den Zuschauerrängen ein erhebliches Sicherheitsrisiko dar. Pyrotechnische Gegenstände, wie beispielsweise ein bengalisches Feuer bereitstellende Handfackeln, können sehr hohe Temperaturen erzeugen, was für den Nutzer sowie für andere Besucher in seiner Nähe ein indirektes Verletzungsrisiko durch Verbrennungen birgt. Zudem können solche pyrotechnischen Gegenstände zu einer erheblichen Rauchbildung führen und umstehende Personen blenden. In den Zuschauerrängen, wo eine große Anzahl an Besuchern möglicherweise dicht gedrängt beieinandersteht, kann dies zu weiteren Verletzungen führen, wenn Besucher aufgrund der unübersichtlichen Lage stürzen oder niedergestoßen werden, insbesondere im Fall einer Panik. Pyrotechnische Gegenstände sind daher in Veranstaltungsstätten insbesondere in Sportstadien in vielen Ländern, wie beispielsweise Deutschland, offiziell verboten. Ferner sind entsprechende pyrotechnische Gegenstände aufgrund der zuvor beschriebenen Gefahren in den meisten Veranstaltungsstätten durch die Veranstalter eines Ereignisses und/oder die Eigentümer der Veranstaltungsstätte untersagt.

Um entsprechende Verbote zu umgehen, gehen die Nutzer solcher pyrotechnischen Gegenstände häufig planmäßig vor und agieren aus einer Gruppe heraus. Dabei sind der Nutzer des pyrotechnischen Gegenstandes und/oder seine Helfer zumeist maskiert, was eine direkte Identifizierung des Nutzers während der Nutzung in der Regel unmöglich macht. Eine Identifizierung wird zudem erschwert durch die starke Rauchentwicklung und ein mögliches Untertauchen des Nutzers des pyrotechnischen Gegenstandes vor sowie nach dessen Nutzung in der Gruppe seiner Helfer. In aller Regel bedeutet dies, dass das Sicherheitspersonal, wenn der pyrotechnische Gegenstand erst einmal entzündet wurde und dessen Nutzung erkannt werden kann, kaum noch eine Chance hat, den Nutzer zu identifizieren und seiner habhaft zu werden.

Die US 2004/017929 A1 beschreibt ein Erfassen von unbefugtem Betreten kontrollierter Zugangsbereichen mittels unerlaubtem Mitdurchtritts (Tailgating) oder Rückwärtseintrittsmethoden (Reverse-Entry-Methoden) unter Verwendung von Verfahren des maschinellen Sehens. Kamerabilder des kontrollierten Bereichs werden verarbeitet, um Objekte in dem kontrollierten Bereich zu identifizieren und zu verfolgen. Die Verarbeitung umfasst eine 3D-Oberflächenanalyse zum Unterscheiden und Klassifizieren von Objekten in einem Sichtfeld. Merkmalsextraktion, Farbanalyse und Mustererkennung werden zur Identifizierung und Verfolgung von Objekten verwendet. Eine Integration in Sicherheitsüberwachungssysteme und Sicherheitssteuerungssysteme stellt eine Benachrichtigung bereit, wenn ein Tailgating- oder Reverse-Entry-Ereignis aufgetreten ist.

WO03/088157 A1 beschreibt ein Sicherheitsüberwachungssystem.

Der Erfindung liegt die Aufgabe zugrunde, ein Verfahren und ein technisches System zum Identifizieren potenzieller Nutzer eines pyrotechnischen Gegenstands in einer Veranstaltungsstätte zu schaffen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum automatischen Identifizieren ein oder mehrerer potentieller Nutzer eines pyrotechnischen Gegenstands in einer Veranstaltungsstätte, wobei die Veranstaltungsstätte zumindest einen Eingang und zumindest einen Ausgang umfasst, wobei die Veranstaltungsstätte ferner zumindest einen räumlich abgegrenzten ersten Aufenthaltsbereich umfasst, welcher über eine begrenzte Anzahl an Zugängen betreten und verlassen werden kann,
wobei die Veranstaltungsstätte ferner ein elektronisches System mit einer Mehrzahl von Überwachungskameras umfasst, welche zur Aufnahme von Bildern im sichtbaren Wellenlängenbereich konfiguriert sind, und mit ein oder mehreren IR-Sensoren zum Erfassen einer Wärmequelle,
wobei das Verfahren umfasst:
   - Erfassen von Besuchern beim Betreten der Veranstaltungsstätte durch den zumindest einen Eingang unter Verwendung von ein oder mehreren Überwachungskameras,
      wobei für jeden der Besucher eine Kombination charakteristischer Attribute erfasst wird, anhand derer der entsprechenden Besucher eindeutig identifiziert werden kann,
      wobei für jeden der erfassten Besucher ferner eine eindeutige ID erstellt, den für den entsprechenden Besucher erfassten Attributen zugeordnet und zusammen mit den zugeordneten Attributen in einer Datenbank gespeichert wird,
   - wiederholtes Aktualisieren einer Anwesenheitsliste aller erfassten Besucher, welche sich in dem ersten Aufenthaltsbereich aufhalten, wobei das Aktualisieren der Anwesenheitsliste ein Identifizieren aller erfassten Besucher umfasst, welche den ersten Aufenthaltsbereich durch einen der Zugänge betreten oder verlassen,
      wobei das Identifizieren eines erfassten Besuchers, welcher den ersten Aufenthaltsbereich betritt oder verlässt, jeweils ein Erfassen der charakteristischen Attribute des entsprechenden Besuchers unter Verwendung von ein oder mehreren Überwachungskameras, einen Zugriff auf die Datenbank und ein Bestimmen der den erfassten Attributen zugeordneten ID umfasst,
         - Erfassen, wenn der pyrotechnische Gegenstand innerhalb des ersten Aufenthaltsbereichs gezündet wird, unter Verwendung zumindest eines der IR-Sensoren,
         - auf das Erfassen des Zündens des pyrotechnischen Gegenstands hin, Analysieren von ersten Aufnahmen des ersten Aufenthaltsbereichs und der sich in dem ersten Aufenthaltsbereich aufhaltenden Besucher, welche unmittelbar vor dem Zünden unter Verwendung von ein oder mehreren Überwachungskameras gemacht wurden, wobei das Analysieren ein Identifizieren aller auf den ersten Aufnahmen identifizierbaren Besucher umfasst, für welche charakteristische Attribute auf den ersten Aufnahmen erkannt werden können und für welche eine den erkannten Attributen zugeordnete ID bestimmt werden kann,
         - Bestimmen der IDs aller auf den ersten Aufnahmen nicht identifizierbarer Besucher, welche zum Zeitpunkt der Erstellung der analysierten ersten Aufnahmen gemäß der Anwesenheitsliste in dem ersten Aufenthaltsbereich anwesend waren, wobei das Bestimmen einen Abgleich der von der Anwesenheitsliste umfassten IDs mit den IDs der auf den ersten Aufnahmen identifizierten Besucher umfasst,
         - Bestimmen von ein oder mehreren der auf den ersten Aufnahmen nicht identifizierbarer Besucher als die ein oder mehreren potentiellen Nutzer des pyrotechnischen Gegenstands,
         - Erkennen der ein oder mehreren potentiellen Nutzer beim Verlassen der Veranstaltungsstätte durch den zumindest einen Ausgang unter Verwendung von ein oder mehreren Überwachungskameras, wobei das Erkennen der ein oder mehreren potentiellen Nutzer ein Erfassen der charakteristischen Attribute umfasst, welche den IDs der ein oder mehreren potentiellen Nutzer zugeordnet sind,
         - auf ein Erkennen eines der potentiellen Nutzers hin, Erstellen eines Erkennungssignals.

Unter einer Veranstaltung wird hier ein zeitlich begrenztes und geplantes Ereignis, an welchem eine Gruppe von Menschen bzw. Besuchern teilnimmt. Ein solches Ereignis hat im Allgemeinen ein definiertes Ziel und/oder eine Programmfolge mit thematischer, inhaltlicher Bindung oder Zweckbestimmung. Bei einer solchen Veranstaltung kann es sich beispielsweise um ein Sportereignis, wie etwa ein Fußballspiel, oder eine musikalische Veranstaltung, wie etwa ein Musikkonzert, handeln. Unter einer Veranstaltungsstätte wird hier ein Ort mit räumlich definierten Grenzen verstanden, an welchem eine entsprechende Veranstaltung durchgeführt wird und welcher nur über eine begrenzte Anzahl an räumlich definierten Eingängen und Ausgängen betreten bzw. verlassen werden kann. Ein Eingang und Ausgang kann dabei räumlich zusammenfallen, so dass die Veranstaltungsstätte durch dieselben räumlichen Bereiche betreten und verlassen werden kann. Ferner können Ein- und Ausgänge voneinander getrennt sein, so dass die Veranstaltungsstätte nur durch bestimmte räumliche Bereiche betreten und nur durch bestimmte andere räumliche Bereiche verlassen werden kann.

Ein räumlich abgegrenzter Aufenthaltsbereich ist ein Bereich der Veranstaltungsstätte, welcher nur über eine begrenzte Anzahl von Zugängen betreten und verlassen werden kann. Eine Veranstaltungsstätte kann eine Mehrzahl von gegeneinander abgegrenzten Aufenthaltsbereichen umfassen. Bei einem solchen Aufenthaltsbereich kann es sich beispielsweise um einen Block einer Zuschauertribüne oder um einen geschlossenen Raum handeln. Nach Ausführungsformen kann die Veranstaltungsstätte auch genau einen Aufenthaltsraum umfassen, beispielsweise kann die gesamte Veranstaltungsstätte den Aufenthaltsbereich darstellen, wobei es sich in diesem Fall bei den Zugängen um die Ein- und Ausgänge der Veranstaltungsstätte handelt. Der Aufenthaltsbereich kann ein oder mehrere Zugänge aufweisen. Beispielsweise kann der Aufenthaltsbereich unterschiedliche Zugänge zum Betreten und zum Verlassen aufweisen, so dass der Aufenthaltsbereich nicht durch denselben Zugang verlassen werden kann, durch den er betreten wurde.

Bei Veranstaltungsstätten kann es sich insbesondere um Sportarenen, Messehallen, Konzerthallen oder auch ein räumlich abgegrenztes Festivalgelände bzw. Open Air Gelände handeln.

Bei einem pyrotechnischen Gegenstand handelt es sich um einen Gegenstand, welcher einen pyrotechnischen Satz umfasst, bei dessen chemischer Zustandsänderung bestimmte Bewegungs-, Licht-, Knall-, Rauch-, Nebel-, Druck- und/oder Reizwirkungen hervorgerufen werden. Ein pyrotechnischer Satz ist ein Stoffgemisch zur Erzeugung akustischer, optischer, thermischer und/oder mechanischer Effekte. Er enthält beispielsweise mindestens ein Oxidationsmittel und einen Brennstoff. Pyrotechnische Sätze sind die chemischen Funktionsträger von pyrotechnischen Gegenständen. Als explosionsgefährliche Stoffe können sie insbesondere rechtlichen Regelungen und Einschränkungen ihrer Verwendung unterliegen. Bei einem pyrotechnischen Gegenstand kann es sich beispielsweise um eine Handfackel handeln, welche bei ihrer Zündung ein bengalisches Feuer als pyrotechnischen Effekt bereitstellt. Die Verwendung einer solchen Handfackel kann insbesondere gefährlich sein, wenn u.a. Magnesium verbrannt wird, dessen Flamme eine Temperatur zwischen 1600°C und 2500°C erreichen kann. Verbrennungen können in diesem Fall nicht nur bei direktem Kontakt mit dem Feuer, sondern sogar ohne Kontakt hervorgerufen werden, wenn man sich der Flamme zu sehr annähert. Die intensive Lichterzeugung kann bei direktem Blickkontakt zu massiven Blendwirkungen bis hin zu Augenverletzungen führen. Ein Ersticken in Sand, Löschen mit Wasser oder Feuerlöschern ist oft nicht möglich. Die Handfackel sowie die Schlacke, welche von der Handfackel tropfen kann, sind im Allgemeinen noch lange Zeit so heiß, dass sie auch bei kurzen Berührungen erhebliche Verbrennungen verursachen können. Ferner können solche Fackeln dichten und intensiven Rauch entwickeln, welcher zu Sichtbehinderungen und innerhalb großer Menschenmengen zu panikartigem Verhalten führen kann. Das Einatmen des Rauchs kann abhängig von der chemischen Zusammensetzung des pyrotechnischen Satzes zu Atemwegsproblemen führen.

Die Überwachungskameras des elektronischen Systems können so verteilt sein, dass mit ihnen beispielsweise die gesamte Veranstaltungsstätte oder zumindest wesentliche Bereiche derselben überwacht werden können. Beispielsweise sind entsprechende Überwachungskameras an den Eingängen und Ausgängen der Veranstaltungsstätte angeordnet, um erkennen zu können, wer die Veranstaltungsstätte betritt bzw. verlässt. Ferner können Überwachungskameras an den Zugängen der Veranstaltungsbereiche angeordnet sein, um erkennen zu können, wer die Veranstaltungsbereiche betritt oder verlässt. Schließlich kann das Geschehen innerhalb des Aufenthaltsbereichs mit ein oder mehreren hochauflösenden Kameras, welche dem Aufenthaltsbereich, wie etwa ein Block einer Zuschauertribüne, zugeordnet sind, erfasst werden. Bei dem IR-Sensor handelt es sich um einen Sensor zur Erfassung von elektromagnetischer Strahlung im Infrarotbereich. Dieser Sensor kann beispielsweise von einer Wärmebildkamera umfasst sein, welche ein bildgebendes Gerät zum Empfang elektromagnetischer Strahlung im Infrarotbereich darstellt. Der Infrarotbereich liegt im Wellenlängenbereich von ca. 0,7 µm bis 1000 µm. Mit einem solchen Infrarotsensor können beispielsweise Wärmequellen innerhalb des Aufenthaltsbereichs erfasst werden, welche aufgrund ihrer im Verhältnis zur Umgebung erhöhten Wärme elektromagnetischer Strahlung mit einer höheren Frequenz als ihre Umgebung abstrahlen.

Gemäß dem vorgeschlagenen Verfahren werden alle Besucher der Veranstaltungsstätte beim Betreten derselben durch einen der Eingänge mittels ein oder mehrerer Überwachungskameras erfasst. Dabei wird für jeden der Besucher eine Kombination aus ein oder mehreren charakteristischen Attributen erfasst. Beispielsweise werden charakteristische physiologische Merkmale der Gesichter der Besucher mittels eines Verfahrens zur Gesichtserkennung erfasst. Somit erhält man für jeden Besucher, der die Veranstaltungsstätte betritt, einen Satz von Attributen, mittels derer der entsprechende Besucher, wenn er sich innerhalb der Veranstaltungsstätte bewegt, durch die weiteren Überwachungskameras eindeutig identifiziert und so seine Bewegungen innerhalb der Veranstaltungsstätte erfasst werden können. Ferner wird für jeden Besucher eine eindeutige ID erstellt. Bei dieser ID kann es sich beispielsweise um eine alphanumerische Zeichenfolge handeln, welche beispielsweise den Veranstaltungsort, das aktuelle Ereignis und/oder eine fortlaufende Zahl umfasst. Diese eindeutige ID wird den für den entsprechenden Besucher erfassten Attributen zugeordnet und in einer Datenbank gespeichert. Diese in der Datenbank gespeicherten Daten erlauben es somit, jeden Besucher der Veranstaltungsstätte, zumindest solange er sich in dieser aufhält, durch das elektronische System zu identifizieren, wenn er von einer der Überwachungskameras erfasst wird. Nach Ausführungsbeispielen kann es sich bei der ID beispielsweise auch um den Speicherort, beispielsweise die Zeilennummer einer Tabelle, handeln, in welcher die Attribute des entsprechenden Nutzers gespeichert werden. Insbesondere erlaubt es die Verwendung einer solchen ID, die Anonymität der Besucher zu wahren. Aus der ID geht beispielsweise nicht der Name des jeweiligen Besuchers hervor. Nach weiteren Ausführungsformen kann eine entsprechende ID auch den Namen des Besuchers umfassen, falls dieser bereitgestellt wird.

Eine Datenbank bzw. ein Datenbanksystem bezeichnet ein System zur elektronischen Datenverwaltung. Ein Datenbanksystem erlaubt es, große Datenmengen effizient, widerspruchsfrei und dauerhaft zu speichern und benötigte Teilmengen in unterschiedlichen, bedarfsgerechten Darstellungsformen für Benutzer und Anwendungsprogramme bereitzustellen. Das Datenbanksystem umfasst beispielsweise ein Datenbankmanagementsystem und eine Datenbank im engeren Sinn bzw. Datenbasis. Das Datenbankmanagementsystem stellt eine Verwaltungssoftware zum Verwalten von Daten der Datenbasis bereit. Die Verwaltungssoftware organisiert intern die strukturierte Speicherung der Daten und kontrolliert alle lesenden und schreibenden Zugriffe auf die Datenbank. Die Datenbasis umfasst die Menge der zu verwaltenden Daten.

Ferner wird für jeden der Aufenthaltsbereiche der Veranstaltungsstätte eine Anwesenheitsliste erstellt und wiederholt aktualisiert, so dass anhand der Anwesenheitslisten für die einzelnen Aufenthaltsbereiche erfasst werden kann, welche der am Eingang erfassten Besucher sich in diesem aktuell aufhalten. Eine solche Anwesenheitsliste definiert somit eine Soll-Menge derjenigen Besucher, welche bei einer Überprüfung des Aufenthaltsbereichs angetroffen werden sollten. Beispielsweise handelt es sich bei dem Aufenthaltsbereich um einen Block einer Zuschauertribüne. An den Zugängen des Blocks wird erfasst, welche Besucher den Block betreten und welche diesen verlassen. Diejenigen Besucher, die den Block betreten, werden der Aufenthaltsliste hinzugefügt, diejenigen Besucher, welche den Block verlassen, beispielsweise um zur Toilette zu gehen oder Getränke zu holen, werden von der Anwesenheitsliste gestrichen.

Bei einer Liste kann es sich allgemein um eine elektronische Datei eines beliebigen Dateiformats handeln, wie etwa eine Text- oder Tabellendatei, welche eine strukturierte Datenmenge umfasst.

Mittels des Infrarotsensors kann der Zeitpunkt erfasst werden, an welchem ein pyrotechnischer Gegenstand, wie beispielsweise eine ein bengalisches Feuer erzeugende Handfackel, innerhalb des Aufenthaltsbereichs gezündet wird. Wird eine Wärmequelle erfasst, welche infrarote Strahlung in einem Frequenzbereich oberhalb einer Schwellenwertfrequenz abstrahlt, kann daraus geschlossen werden, dass ein pyrotechnischer Gegenstand gezündet wurde. Beispielsweise wird der Zeitpunkt des Zündens, d.h. des erstmaligen Erfassens der Wärmestrahlung mit der entsprechenden Frequenz erfasst.

Somit kann zeitnah festgestellt werden, dass ein pyrotechnischer Gegenstand gezündet wurde. Aufgrund der im Allgemeinen verwendeten Maskierung des Nutzers beim Einsatz des pyrotechnischen Gegenstands sowie der starken Blendwirkung und/oder Rauchentwicklung, kann der Nutzer des pyrotechnischen Gegenstandes im Allgemeinen nicht direkt identifiziert werden.

In Ausführungsformen werden Aufnahmen der Uberwachungskameras des Aufenthaltsbereichs analysiert, welche unmittelbar vor dem Zünden des pyrotechnischen Gegenstands erstellt wurden. In diesen Aufnahmen wird das Erfassen der sich im Aufenthaltsbereich aufhaltenden Besucher weder durch die Lichtnoch durch die Rauchentwicklung des gezündeten pyrotechnischen Gegenstands behindert. Eigentlich sollten auf den entsprechenden Aufnahmen alle Besucher identifizierbar sein, welche sich zu dem Zeitpunkt, an welchem die Aufnahmen erstellt wurden, gemäß der Anwesenheitsliste in dem entsprechenden Aufenthaltsbereich aufgehalten haben. Hierzu werden die Anwesenheitslisten und ihre zeitlichen Veränderungen beispielsweise in der Datenbank protokolliert.

Durch einen Abgleich der auf den Aufnahmen identifizierten Besucher mit den von der entsprechenden Anwesenheitsliste umfassten Besuchern können die IDs derjenigen Besucher bestimmt werden, welche nicht identifizierbar sind. Hierbei stellt die Anwesenheitsliste beispielsweise die Soll-Menge der identifizierbaren Besucher dar, während die auf den Aufnahmen identifizierten Besucher eine Ist-Menge der identifizierbaren Besucher darstellt.

Ein oder mehrere der nicht identifizierbaren Besucher können unter der Annahme, dass zumindest der Nutzer des pyrotechnischen Gegenstands maskiert und damit nicht identifizierbar auf den Aufnahmen der Überwachungskameras ist, als potenzieller Nutzer des pyrotechnischen Gegenstands bestimmt werden. Somit kann die Gruppe der verdächtigen Personen erheblich eingeschränkt werden. Beispielsweise können aus einer Gruppe von mehreren hundert oder tausend Besuchern einige wenige, beispielsweise eine Person, zehn Personen, zwanzig Personen, dreißig Personen, vierzig Personen, fünfzig Personen, sechzig Personen, siebzig Personen, achtzig Personen, neunzig Personen oder hundert Personen identifiziert werden, welche als Nutzer des pyrotechnischen Gegenstands in Betracht kommen.

Unter Verwendung der Überwachungskameras am Ausgang der Veranstaltungsstätte können auf Basis von Attributen, welche erfasst werden, die die Veranstaltungsstätte verlassenden Besucher identifiziert werden. Wird eine charakteristische Kombination von Attributen erfasst, welche einer ID eines potenziellen Nutzers zugeordnet ist, wird dieser potenzielle Nutzer erkannt und ein Erkennungssignal erstellt. Ein solches Erkennungssignal kann beispielsweise an eine Kontrollvorrichtung am Ausgang der Veranstaltungsstätte gesendet werden, wobei die Kontrollvorrichtung auf den Empfang des Erkennungssignals hin den Ausgang für den erkannten potenziellen Nutzer des pyrotechnischen Gegenstands sperrt. Ferner kann das Erkennungssignal beispielsweise an Kommunikationsgeräte, insbesondere mobile Kommunikationsgeräte des Sicherheitspersonals an dem entsprechenden Ausgang, gesendet werden. Dadurch kann das Sicherheitspersonal auf den potenziellen Nutzer des pyrotechnischen Gegenstands hingewiesen werden und dieser kann einer genaueren Untersuchung beispielsweise auf Rauchspuren und/oder Gegenstände, wie etwa Kleidungsgegenstände, welche zur Maskierung verwendet wurden, untersucht werden. Mobile Kommunikationsgeräte umfassen beispielsweise Smartphones, tragbare Computer, wie zum Beispiel Laptops oder Palmtop-Computer, Personal Digital Assistants oder dergleichen handeln. Ferner kann es sich beispielsweise um eine Smartwatch oder Smartglasses handeln.

Ausführungsformen können somit den Vorteil haben, dass sie auf effiziente Weise ermöglichen, in einer Veranstaltungsstätte mit mehreren tausenden von Besuchern eine überschaubare Anzahl von potenziellen Nutzern eines pyrotechnischen Gegenstands zu identifizieren. Ist ein entsprechender Nutzer erst einmal identifiziert, so kann er beispielsweise durch ein Hausverbot von zukünftigen vergleichbaren Aktionen abgehalten werden. Nach Ausführungsformen kann hierzu die charakteristische Kombination von Attributen, welche für den Nutzer erfasst wurden, dauerhaft, d.h. zumindest für die Dauer des Zutrittsverbots, in einer Sperrliste gesperrt werden. Versucht der Nutzer, die Veranstaltungsstätte zu einem späteren Zeitpunkt erneut zu betreten und werden seine Attribute durch eine Überwachungskamera an einem der Eingänge erfasst, so kann durch einen Abgleich der erfassten Attribute mit den auf der Sperrliste gespeicherten Attributen erkannt werden, dass ein Besucher mit Zutrittsverbot versucht, die Veranstaltungsstätte zu betreten. In diesem Fall kann ein weiteres Erkennungssignal erzeugt und an eine Zugangskontrolle am Eingang der Veranstaltungsstätte gesendet werden und/oder an ein oder mehrere Kommunikationsgeräte gesendet werden. Die Kontrollvorrichtung kann beispielsweise mittels einer Sperrvorrichtung den Zugang für den erkannten Besucher mit Zutrittsverbot sperren. Ferner kann das Sicherheitspersonal über die Kommunikationsgeräte von dem versuchten unrechtmäßigen Zutritt informiert werden.

Nach Ausführungsformen werden, falls für den tatsächlichen Nutzer des pyrotechnischen Gegenstands auf den ersten Aufnahmen ein oder mehrere charakteristische Attribute erkennbar sind, alle auf den ersten Aufnahmen nicht identifizierbarer Besucher als potentielle Nutzer des pyrotechnischen Gegenstands ausgeschlossen, deren IDs die für den tatsächlichen Nutzer des pyrotechnischen Gegenstands erkannten Attribute nicht zugeordnet sind.

Ausführungsformen können den Vorteil haben, dass die Menge der identifizierten potenziellen Nutzer weiter eingeschränkt werden kann. Beispielsweise kann der tatsächliche Nutzer des pyrotechnischen Gegenstands auf einer der analysierten Aufnahmen maskiert zu sehen sein. Aufgrund der Maskierung kann beispielsweise die Anzahl der erfassbaren Attribute so weit eingeschränkt sein, dass keine eindeutige Identifikation möglich ist. Dennoch können beispielsweise einzelne Attribute, wie etwa physikalische Merkmale des allgemeinen Körperbaus, erkannt werden. Bei derartigen Merkmalen kann es sich beispielsweise um die Körpergröße, Kopfdurchmesser, Schulterbreite, Armlänge, Oberkörperlänge oder ähnliche Merkmale handeln, welche selbst im Fall einer Maskierung des Gesichts erfasst werden können. Abhängig von der Maskierung kann beispielsweise auch der Augenabstand als ein mögliches Ausschlusskriterium erfasst werden. Es kann beispielsweise vorkommen, dass ein Besucher auf den analysierten Aufnahmen nicht zu erkennen ist, weil er sich beispielsweise die Schuhe bindet oder von einem anderen Besucher verdeckt wird. Wird ein Attribut für den tatsächlichen Nutzer des pyrotechnischen Gegenstands erfasst, welches einem Attribut eines nicht identifizierbaren Besuchers widerspricht, so kann dieser Nutzer mit widersprechendem Attribut als potenzieller Nutzer ausgeschlossen werden. Beispielsweise wird für den tatsächlichen Nutzer des pyrotechnischen Gegenstands eine Körpergröße oder Schulterbreite erfasst, welche von der Körpergröße oder Schulterbreite eines nicht identifizierbaren Besuchers um mehr als eine Mindestdifferenz abweicht.

Nach Ausführungsformen wird unter Verwendung zumindest eines der IR-Sensoren die Position innerhalb des Aufenthaltsbereichs bestimmt, an welcher der pyrotechnische Gegenstand gezündet wird, wobei alle auf den ersten Aufnahmen nicht identifizierbaren Besucher als potentieller Nutzer des pyrotechnischen Gegenstands ausgeschlossen werden, welche auf ein oder mehreren zweiten Aufnahmen des ersten Aufenthaltsbereichs identifizierbar sind und sich auf den zweiten Aufnahmen außerhalb eines festgelegten Bereichs um die Position befinden, an welcher der pyrotechnische Gegenstand gezündet wird, wobei die zweiten Aufnahmen zeitlich vor den ersten Aufnahmen gemacht wurden.

Ausführungsformen können den Vorteil haben, dass der Infrarotsensor beispielsweise von einer Wärmebildkamera umfasst wird. Nach Ausführungsformen wird ein Bild des Aufenthaltsbereichs zum Zeitpunkt des Entzündens des Infrarotsensors aufgenommen, auf welchem die Position, an welcher der pyrotechnische Gegenstand entzündet wird, bestimmt werden kann. Ausgehend von dieser Position kann ein mit zeitlichem Abstand zum Zeitpunkt des Entzündens zunehmender maximalen Abstandsbereich definiert werden, innerhalb dessen es Besuchern möglich war, rechtzeitig zur Position des Entzündens zu gelangen und somit als potenzielle Nutzer des pyrotechnischen Gegenstands in Frage zu kommen. Das Verhalten der Besucher in dem Aufenthaltsbereich kann durch eine Analyse weiterer Aufnahmen, welche zeitlich weiter vor dem Zeitpunkt des Entzündens des pyrotechnischen Gegenstands liegen, rückverfolgt werden. Einzelne oder mehrere der kurz vor dem Zeitpunkt des Entzündens nicht identifizierbaren Besucher können auf früheren Aufnahmen identifizierbar sein. Beispielsweise wurde ein Besucher nur vorrübergehend von einem Vordermann verdeckt oder hat sich die Schnürsenkel gebunden. Wird ein solcher Besucher auf einer früheren Aufnahme identifiziert und für diesen eine Position bestimmt, welche außerhalb des zum Zeitpunkt der Aufnahme gültigen Abstandsbereichs liegt, erfasst, so kann dieser als potenzieller Nutzer ausgeschlossen werden. Liegt seine Position außerhalb des Abstandsbereichs, so war es ihm nicht möglich, innerhalb der bis zum Entzünden des pyrotechnischen Gegenstands verbleibenden Zeit von seiner Position bis zu der Position zu gelangen, an welcher der pyrotechnische Gegenstand entzündet wurde.

Nach Ausführungsformen werden alle auf den ersten Aufnahmen nicht identifizierbarer Besucher als die ein oder mehreren potentiellen Nutzer des pyrotechnischen Gegenstands bestimmt.

Ausführungsformen können den Vorteil haben, dass als potenzielle Nutzer nur solche Besucher ausgeschlossen werden, welche vor dem Zeitpunkt des Entzündens des pyrotechnischen Gegenstands eindeutig identifizierbar waren. Somit können nur Besucher ausgeschlossen werden, bei welchen es sich mit sehr hoher Wahrscheinlichkeit nicht um den Nutzer des pyrotechnischen Gegenstands handelt. Alle Besucher, welche nicht eindeutig ausgeschlossen werden können, werden somit automatisch zu der Gruppe der potenziellen Nutzer hinzugerechnet und beim Verlassen der Veranstaltungsstätte gegebenenfalls einer genaueren Untersuchung unterzogen.

Nach Ausführungsformen umfasst das Verfahren ferner:
- Identifizieren eines Besuchers beim Verlassen des ersten Aufenthaltsbereichs nach dem Zünden des pyrotechnischen Gegenstands, wobei der identifizierte Besucher nicht von der Anwesenheitsliste umfasst ist,
- falls der entsprechende Besucher auf den ersten Aufnahmen nicht identifizierbar ist, Bestimmen des entsprechenden Besuchers als einen der potentiellen Nutzer des pyrotechnischen Gegenstands.

Ausführungsformen können den Vorteil haben, dass falls ein Besucher beim Verlassen des Bereichs nach dem Zünden des pyrotechnischen Gegenstands identifiziert wird, welcher jedoch nicht bei seinem Betreten des Aufenthaltsbereichs identifiziert wurde, dennoch bei der Analyse der Aufnahmen berücksichtigt wird. So kann ein Fehler beim Betreten des Aufenthaltsbereichs oder eine Maskierung beim Betreten des Aufenthaltsbereichs dazu führen, dass der entsprechende Nutzer nicht zu der Anwesenheitsliste hinzugefügt wurde. Durch solche Ausführungsformen kann auch ein solcher Besucher, welcher sich ursprünglich nicht auf der Aufenthaltsliste befunden hat, möglicherweise zum Zeitpunkt des Entzündens des pyrotechnischen Gegenstands aber dennoch anwesend war, bei der Bestimmung der potenziellen Nutzer berücksichtig werden.

Nach Ausführungsformen umfasst das Verfahren ferner:
- Erfassen eines Besuchers beim Verlassen des ersten Aufenthaltsbereichs nach dem Zünden des pyrotechnischen Gegenstands, für welchen eine Kombination von charakteristischen Attributen erfasst wird, welche nicht von der Datenbank umfasst ist,
- Erstellen einer eindeutigen ID für den entsprechenden Besucher, Zuordnen der ID zu den für den entsprechenden Besucher erfassten Attributen und Speichern der ID zusammen mit den zugeordneten Attributen in der Datenbank,
- falls der entsprechende Besucher auf den ersten Aufnahmen nicht identifizierbar ist, Bestimmen des entsprechenden Besuchers als einen der potentiellen Nutzer des pyrotechnischen Gegenstands.

Ausführungsformen können den Vorteil haben, dass auch solche Besucher berücksichtigt werden, welche beim Betreten der Veranstaltungsstätte nicht oder nicht richtig erfasst wurden. Dies kann beispielsweise durch einen Fehler bei der Auswertung in der Aufnahme der Überwachungskameras am Eingang der Veranstaltungsstätte oder ein gezielt ausweichendes Verhalten des entsprechenden Besuchers beim Betreten der Veranstaltungsstätte sein. Ausführungsformen können es ermöglichen, dass auch solche nicht oder nicht richtig erfassten Besucher bei der Analyse der Aufnahmen vor dem Zeitpunkt des Entzündens des pyrotechnischen Gegenstands berücksichtigt werden und gegebenenfalls zu der Gruppe der potenziellen Nutzer gezählt werden.

Nach Ausführungsformen umfasst das Verfahren ferner:
- nach dem Zünden des pyrotechnischen Gegenstands, Erfassen eines Besuchers beim Verlassen der Veranstaltungsstätte durch den zumindest einen Ausgang unter Verwendung von ein oder mehreren Überwachungskameras, für welchen eine Kombination von charakteristischen Attributen erfasst wird, welche nicht von der Datenbank umfasst ist,
- Erstellen eines Erkennungssignals.

Ausführungsformen können den Vorteil haben, dass auch solche Besucher beim Verlassen der Veranstaltungsstätte als mögliche potenzielle Nutzer des pyrotechnischen Gegenstands berücksichtigt werden, welche beispielsweise aufgrund einer fehlerhaften Erfassung am Ausgang und/oder einem ausweichenden Verhalten des entsprechenden Besuchers, am Ausgang nicht so erfasst werden können, dass ein zuverlässiger Abgleich mit der zuvor bestimmten Gruppe der potenziellen Nutzer möglich ist. Somit können auch solche Personen, welche beim Verlassen der Veranstaltungsstätte nicht eindeutig zugeordnet werden können, als mögliche Nutzer des pyrotechnischen Gegenstands berücksichtigt werden.

Nach Ausführungsformen werden Ortsinformationen über die aktuellen Positionen der ein oder mehreren potentiellen Nutzer erstellt, wobei die Ortsinformationen der einzelnen potentiellen Nutzer jeweils aktualisiert werden, auf ein Erkennen des entsprechendes Nutzer unter Verwendung von einer Überwachungskamera, wobei das Erkennen des entsprechenden potentiellen Nutzers ein Erfassen der charakteristischen Attribute umfasst, welche der ID des entsprechenden potentiellen Nutzers zugeordnet ist, und wobei zur Aktualisierung Positionsdaten verwendet werden, welche der entsprechenden Überwachungskamera zugeordnet sind.

Ausführungsformen können den Vorteil haben, dass ein Bewegungsprofil des potenziellen Nutzers des pyrotechnischen Gegenstands nach dessen Verwendung erstellt werden kann. Insbesondere können die potenziellen Nutzer dahingehend überwacht werden, ob sie gegebenenfalls verdächtige Gegenstände vor dem Verlassen der Veranstaltungsstätte loszuwerden versuchen oder Maßnahmen ergreifen, welche eine Identifikation beim Verlassen der Veranstaltungsstätte erschweren könnten.

In Ausführungsformen können zudem anhand von Aufnahmen, welche vor dem Entzünden des pyrotechnischen Gegenstands erstellt wurden, Bewegungsprofile der potenziellen Nutzer im Vorfeld zu dem Entzünden des pyrotechnischen Gegenstands erstellt werden. Insbesondere kann auf entsprechenden Aufnahmen geprüft werden, ob die potenziellen Nutzer möglicherweise verdächtige Gegenstände mitgeführt haben und/oder ob Vorbereitungsmaßnahmen für das Entzünden des pyrotechnischen Gegenstands, wie etwa ein Maskieren, direkt oder indirekt belegt werden kann. Ein direkter Beleg wäre eine Aufnahme, auf welcher sich der entsprechende Besucher maskiert. Ein indirekter Beleg wäre beispielsweise ein kurzzeitiges Verschwinden des entsprechenden Besuchers in den Blickfeldern der Überwachungskameras und ein Auftauchen des maskierten Nutzers des pyrotechnischen Gegenstands kurz darauf.

Nach Ausführungsformen umfasst das Erkennungssignals als Information eines oder mehrerer Attribute, welche der ID des erkannten potentiellen Nutzers zugeordnet sind, und wobei ein oder mehrere der entsprechenden Attribute auf zumindest einem Display angezeigt werden.

Ausführungsformen können den Vorteil haben, dass anhand der angezeigten Attribute der potenzielle Nutzer leicht erkannt werden kann. Beispielsweise kann das Das Sicherheitspersonal selbst bei einer großen Anzahl von Besuchern, welche die Veranstaltungsstätte verlassen wollen, mit Hilfe der gezeigten Attribute einen automatisch erkannten potenziellen Nutzer ausfindig machen.

Nach Ausführungsformen umfasst das Erkennungssignal als Information ein von einer der Überwachungskameras aufgenommenes Bild des erkannten potentiellen Nutzers und das Bild wird auf zumindest einem Display angezeigt.

Ausführungsformen können den Vorteil haben, dass der erkannte potenzielle Nutzer durch das angezeigte Bild leicht ausfindig gemacht werden kann, beispielsweise durch das Sicherheitspersonal am Ausgang der Veranstaltungsstätte.

Nach Ausführungsformen wird das Erkennungssignal an ein oder mehrere mobile Kommunikationsgeräte gesendet, welche jeweils ein Display zum Anzeigen der Informationen umfassen, welche das Erkennungssignal umfasst.

Ausführungsformen können den Vorteil haben, dass das Sicherheitspersonal durch die mobilen Kommunikationsgeräte jederzeit Zugriff auf die Informationen hat, anhand welcher sich der erkannte potenzielle Nutzer leicht erkennen lässt.

Nach Ausführungsformen wird das Erkennungssignal an eine Ausgangskontrollvorrichtung zur Kontrolle des zumindest einen Ausgangs der Veranstaltungsstätte mit einer Sperrvorrichtung zum Sperren des zumindest einen Ausgangs gesendet,
wobei auf das Ausgeben des Erkennungssignals hin eine Sperrung des entsprechenden Ausgangs durch die Sperrvorrichtung erfolgt.

Ausführungsformen können den Vorteil haben, dass durch ein Sperren des Ausgangs mittels der Sperrvorrichtung ein potenzieller Nutzer effektiv am Verlassen der Veranstaltungsstätte gehindert werden kann. Bei der entsprechenden Sperrvorrichtung kann es sich beispielsweise um ein Drehkreuz oder Flügeltüren handeln. Ferner kann es sich bei der Sperrvorrichtung beispielsweise um eine Schleuse mit einem Ein- und einem Ausgang handeln. Wird ein potenzieller Nutzer erkannt, kann der Ein- und Ausgang der Schleuse gesperrt werden und der potenzielle Nutzer kann somit leicht durch das Sicherheitspersonal aus einer großen Anzahl von Besuchern, welche die Veranstaltungsstätte verlassen wollen, ausfindig gemacht werden. Nach Ausführungsformen kann der Grundzustand der Sperrvorrichtung ein Sperren des Ausgangs sein, welches nur aufgehoben wird, wenn ein Besucher, welcher die Sperrvorrichtung passieren möchte, nicht als potenzieller Nutzer erkannt wird. Nach weiteren Ausführungsformen kann die Sperrvorrichtung in ihrem Grundzustand offen sein. Die Sperrvorrichtung bleibt offen, so lange kein potenzieller Nutzer erkannt wird. Wird ein potenzieller Nutzer erkannt, sperrt die Sperrvorrichtung aktiv den Ausgang aus der Veranstaltungsstätte.

Nach Ausführungsformen umfasst das Verfahren ferner ein Löschen der IDs und der Attribute aus der Datenbank.

Nach Ausführungsformen erfolgt das Löschen der IDs und der Attribute zu einem vordefinierten Zeitpunkt oder das Löschen der einzelnen IDs und der jeweils zugeordneten Attribute erfolgt auf ein Erfassen eines Besuchers beim Verlassen der Veranstaltungsstätte, für welchen die der ID zugeordneten Attribute erfasst werden. Ausführungsformen können den Vorteil haben, dass der Datenschutz der Daten der Besucher der Veranstaltungsstätte und insbesondere deren Anonymität sichergestellt werden kann. Die erfassten Attribute werden nur für die Zeit der besuchten Veranstaltung erfasst und zur Identifikation potenzieller Nutzer des pyrotechnischen Gegenstands verwendet. Anschließend werden die entsprechenden Daten gelöscht. Nach Ausführungsformen werden die erfassten Attribute von potenziellen Nutzern des pyrotechnischen Gegenstands und/oder des eindeutig identifizierten tatsächlichen Nutzers des pyrotechnischen Gegenstands gespeichert. Kann keiner der potenziellen Nutzer als tatsächlicher Nutzer des pyrotechnischen Gegenstands identifiziert werden, erlaubt dies die Gruppe potenzieller Nutzer beispielsweise mit den potenziellen Nutzergruppen bei früheren Veranstaltungen zu vergleichen und anhand von Übereinstimmungen einzugrenzen, ob für ein oder mehrere Besucher eine erhöhte Wahrscheinlichkeit besteht, dass sie zum wiederholten Mal pyrotechnische Gegenstände eingesetzt haben. Eine solche erhöhte Wahrscheinlichkeit kann beispielsweise vorliegen, falls ein oder mehrere Besucher überproportional häufig als potentielle Nutzer bestimmt werden.

Nach Ausführungsformen wird das Erfassen von Attributen der einzelnen Besucher unter Verwendung einer der Überwachungskameras jeweils getriggert, wenn der entsprechende Besucher einen für die entsprechende Überwachungskamera festgelegten Überwachungsbereich betritt.

Ausführungsformen können den Vorteil haben, dass Attribute von Besuchern nur dann erfasst werden, wenn von der entsprechenden Überwachungskamera auch tatsächlich Besucher aufgenommen werden. Da die zu verarbeitenden Datenmengen reduziert werden, können die Verarbeitungsprozesse der erfassten Daten effizienter ausgestaltet werden.

Nach Ausführungsformen umfasst das Erfassen des Zündens des pyrotechnischen Gegenstands ein Erfassen einer Wärmequelle unter Verwendung des zumindest einen IR-Sensors innerhalb des ersten Aufenthaltsbereichs, deren Temperatur eine Schwellentemperatur überschreitet.

Ausführungsformen können den Vorteil haben, dass das Zünden eines pyrotechnischen Gegenstands mit hoher Wahrscheinlichkeit identifiziert werden kann. Insbesondere kann durch eine entsprechende Wahltemperatur ein falsches Ereignis beim Erfassen vermieden werden. Umfasst der pyrotechnische Satz des pyrotechnischen Gegenstands beispielsweise Magnesium, so kann als Schwellentemperatur beispielsweise eine Temperatur von 1500°C gewählt werden. Somit kann mit hoher Wahrscheinlichkeit ein falsches Klassifizieren einer Wärmequelle als pyrotechnischer Gegenstand vermieden werden, da sich im Aufenthaltsbereich mit hoher Wahrscheinlichkeit keine Gegenstände mit einer Temperatur von über 1000°C zulässigerweise aufhalten dürfen.

Nach Ausführungsformen umfasst das elektronische System ferner ein Computersystem mit einer Schnittstelle zum Senden von Daten über ein Netzwerk, wobei das Verfahren ferner umfasst:
Senden der Aufnahmen der Überwachungskameras und von Messdaten des zumindest einen IR-Sensors durch das Computersystem über einen kryptographisch gesicherten Kanal des Netzwerks an ein Servercomputersystem, welches die Aufnahmen und Messdaten auswertet und ein Datenbanksystem mit der Datenbank umfasst.

Ausführungsformen können den Vorteil haben, dass ein zentrales Rechenzentrum bereitgestellt werden kann, welches ein Servercomputersystem mit ausreichender Rechenkapazität zur Verfügung stellt, das zur Analyse großer Mengen an Daten auf Basis der Aufnahmen in kurzer Zeit konfiguriert ist. Beispielsweise kann ein entsprechendes Servercomputersystem zur Auswertung der Aufnahmen als Cloudbasierte Infrastruktur zur Verfügung gestellt werden.

Nach Ausführungsformen umfasst das elektronische System ferner ein Computersystem, welches die Aufnahmen der Überwachungskameras und Messdaten des zumindest einen IR-Sensors auswertet, und die Datenbank wird von einem Datenbanksystem des Computersystems umfasst.

Ausführungsformen können den Vorteil haben, dass die erfassten Daten die Veranstaltungsstätte nicht verlassen, wodurch die Sicherheit der erfassten Daten und der Datenschutz der Besucher der Veranstaltungsstätte sichergestellt werden kann.

Nach Ausführungsformen umfassen die erfassten Attribute Gesichtsmerkmale. Nach Ausführungsformen umfassen die erfassten Attribute weitere physiologischen Merkmale. Nach Ausführungsformen umfassen die erfassten Attribute ferner Kleidungsmerkmale.

Ausführungsformen können den Vorteil haben, dass sie effektiv erfassbare Attribute bereitstellen, welche eine zuverlässige Identifikation der Besucher der Veranstaltungsstätte ermöglichen. Zur Erkennung charakteristischer Gesichtsmerkmale kann beispielsweise ein aus dem Stand der Technik bekanntes Verfahren bzw. Algorithmus für Gesichtserkennung verwendet werden. Beispielsweise kann eine Gesichtserkennung auf Basis eines Histogramms orientierter Gradienten (HOG/engl.: Histogram of Oriented Gradients) erfasst werden. Ferner können Templates zum Erfassen charakteristischer Attribute bereitgestellt werden, welche durch ein Training eines Klassifikationsmoduls zum Erkennen charakteristischer Attribute mittels Maschinenlernens, z.B. unter Verwendung eines neuronalen Netzwerks, wie beim Deep Learning, erstellt wurden. Deep Learning stellt eine Klasse von Optimierungsmethoden künstlicher neuronaler Netze bereit, welche zahlreiche Zwischenlagen (engl. hidden layers) zwischen Eingabeschicht und Ausgabeschicht haben und dadurch eine umfangreiche innere Struktur aufweisen. In Erweiterungen der Lernalgorithmen für Netzstrukturen mit wenigen oder keinen Zwischenlagen ermöglichen die Methoden des Deep Learnings auch bei zahlreichen Zwischenlagen einen stabilen Lernerfolg. Neben Merkmalen der Gesichtsphysiognomie können die erfassten Attribute auch weitere physiologische Merkmale, wie Körperabmessungen, z.B. Schulterbreite, Armlänge, Handlänge, Fingerlänge, Beinlänge, Oberkörperlänge, umfassen. Anhand des Körperbaus kann beispielsweise auch das Geschlecht des entsprechenden Besuchers erfasst werden. Ferner können charakteristische Merkmale der Kleidung erfasst werden. Nach Ausführungsformen werden für die Besucher jeweils mehr Attribute erfasst, als für eine eindeutige Identifikation notwendig sind. Dies erlaubt es beispielsweise, wenn bei einer späteren Überprüfung einzelne Attribute nicht mehr erfasst werden können oder durch andere Attribute ersetzt wurden, eine eindeutige Identifikation des entsprechenden Besuchers auf Basis eines verringerten Satzes an Attributen. So kann Kleidung beispielsweise gewechselt werden.

Nach Ausführungsformen umfasst die Veranstaltungsstätte eine Mehrzahl von Aufenthaltsbereichen und für jeden der Aufenthaltsbereiche wird jeweils eine Anwesenheitsliste erstellt und wiederholt aktualisiert.

Ausführungsformen können den Vorteil haben, dass durch eine Mehrzahl von Aufenthaltsbereichen die Anzahl von Besuchern pro Aufenthaltsbereich reduziert werden kann. Somit kann die Anzahl der zu identifizierenden Besucher zum Bestimmen der potenziellen Nutzer reduziert werden. Dies kann zum einen die Korrektheit der Identifikation erhöhen, zum anderen kann somit die Anzahl potenzieller Nutzer weiter eingeschränkt werden.

Ausführungsformen umfassen ein Servercomputersystem zum automatischen Identifizieren ein oder mehrerer potentieller Nutzer eines pyrotechnischen Gegenstands in einer Veranstaltungsstätte, wobei die Veranstaltungsstätte zumindest einen Eingang und zumindest einen Ausgang umfasst, wobei die Veranstaltungsstätte ferner zumindest einen räumlich abgegrenzten ersten Aufenthaltsbereich umfasst, welcher über eine begrenzte Anzahl an Zugängen betreten und verlassen werden kann,
wobei die Veranstaltungsstätte ferner ein elektronisches System mit einer Mehrzahl von Überwachungskameras umfasst, welche zur Aufnahme von Bildern im sichtbaren Wellenlängenbereich konfiguriert sind, und mit ein oder mehreren IR-Sensoren zum Erfassen einer Wärmequelle,
wobei das Servercomputersystem einen Prozessor, einen Speicher mit ausführbaren Programminstruktionen und eine Schnittstelle zum Empfangen von Daten über ein Netzwerk umfasst, wobei das Servercomputersystem ferner mit einer Datenbank verbunden ist,
wobei der Prozessor das Servercomputersystem bei einem Ausführen der Programminstruktionen dazu steuert:
   - Aufnahmen von den Überwachungskameras über die Schnittstelle und das Netzwerk zu empfangen,
   - Besucher auf den Aufnahmen beim Betreten der Veranstaltungsstätte durch den zumindest einen Eingang zu erfassen,
      wobei für jeden der Besucher eine Kombination charakteristischer Attribute erfasst wird, anhand derer der entsprechenden Besucher eindeutig identifiziert werden kann,
      wobei für jeden der erfassten Besucher ferner eine eindeutige ID erstellt, den für den entsprechenden Besucher erfassten Attributen zugeordnet und zusammen mit den zugeordneten Attributen zur Speicherung an die Datenbank gesendet wird,
   - wiederholt eine Anwesenheitsliste aller erfassten Besucher zu aktualisieren, welche sich in dem ersten Aufenthaltsbereich aufhalten, wobei das Aktualisieren der Anwesenheitsliste ein Identifizieren aller erfassten Besucher umfasst, welche auf den Aufnahmen den ersten Aufenthaltsbereich durch einen der Zugänge betreten oder verlassen,
      wobei das Identifizieren eines erfassten Besuchers, welcher den ersten Aufenthaltsbereich betritt oder verlässt, jeweils ein Erfassen der charakteristischen Attribute des entsprechenden Besuchers unter Verwendung von ein oder mehreren Überwachungskameras, einen Zugriff auf die Datenbank und ein Bestimmen der den erfassten Attributen zugeordneten ID umfasst,
   - Messdaten von zumindest einem der IR-Sensoren über die Schnittstelle und das Netzwerk zu empfangen,
   - zu erfassen, wenn der pyrotechnische Gegenstand innerhalb des ersten Aufenthaltsbereichs gezündet wird, unter Verwendung der Messdaten von dem zumindest einen IR-Sensor,
   - auf das Erfassen des Zündens des pyrotechnischen Gegenstands hin, die empfangenen Aufnahmen des ersten Aufenthaltsbereichs und der sich in dem ersten Aufenthaltsbereich aufhaltenden Besucher zu analysieren, welche vor dem Zünden unter Verwendung von den Überwachungskameras gemacht wurden,
      wobei das Analysieren ein Identifizieren aller auf den Aufnahmen identifizierbaren Besucher umfasst, für welche charakteristische Attribute auf den Aufnahmen erkannt werden können und für welche eine den erkannten Attributen zugeordnete ID bestimmt werden kann,
   - die IDs aller auf den Aufnahmen nicht identifizierbarer Besucher zu bestimmen, welche zum Zeitpunkt der Erstellung der analysierten Aufnahmen gemäß der Anwesenheitsliste in dem ersten Aufenthaltsbereich anwesend waren, wobei das Bestimmen einen Abgleich der von der Anwesenheitsliste umfassten IDs mit den IDs der auf den analysierten Aufnahmen identifizierten Besucher umfasst,
   - ein oder mehrerer der auf den Aufnahmen nicht identifizierbarer Besucher als die ein oder mehreren potentiellen Nutzer des pyrotechnischen Gegenstands zu bestimmen,
   - ein oder mehreren potentiellen Nutzer auf Aufnahmen beim Verlassen der Veranstaltungsstätte durch den zumindest einen Ausgang zu erkennen, wobei das Erkennen der ein oder mehreren potentiellen Nutzer ein Erfassen der charakteristischen Attribute umfasst, welche den IDs der ein oder mehreren potentiellen Nutzer zugeordnet sind,
   - auf ein Erkennen eines der potentiellen Nutzers hin, Erstellen und Senden eines Erkennungssignals.

Ausführungsformen können den Vorteil haben, dass mit einem entsprechenden Servercomputersystem eine leistungsstarke und effiziente Infrastruktur, beispielsweise für eine Mehrzahl von Veranstaltungsstätten, insbesondere parallel, bereitgestellt werden kann.

Nach Ausführungsformen ist das Servercomputersystem dazu konfiguriert, die vorgenannten Ausführungsformen des Verfahrens zu implementieren.

Nach Ausführungsformen wird das Erkennungssignal an ein oder mehrere mobile Kommunikationsgeräte gesendet.

Nach Ausführungsformen wird das Erkennungssignal an eine Ausgangskontrollvorrichtung zur Kontrolle des zumindest einen Ausgangs der Veranstaltungsstätte mit einer Sperrvorrichtung zum Sperren des zumindest einen Ausgangs gesendet,
wobei die Sperrvorrichtung dazu konfiguriert ist, auf ein Empfangen des Erkennungssignals den entsprechenden Ausgang zu sperren.

Ausführungsformen umfassen ein elektronisches System zum automatischen Identifizieren ein oder mehrerer potentieller Nutzer eines pyrotechnischen Gegenstands in einer Veranstaltungsstätte, wobei die Veranstaltungsstätte zumindest einen Eingang und zumindest einen Ausgang umfasst, wobei die Veranstaltungsstätte ferner zumindest einen räumlich abgegrenzten ersten Aufenthaltsbereich umfasst, welcher über eine begrenzte Anzahl an Zugängen betreten und verlassen werden kann,
wobei das elektronische System eine Mehrzahl von Überwachungskameras umfasst, welche zur Aufnahme von Bildern im sichtbaren Wellenlängenbereich konfiguriert sind, und ein oder mehreren IR-Sensoren zum Erfassen einer Wärmequelle,
wobei das elektronische System ferner ein Computersystem mit einem Prozessor und einem Speicher mit ausführbaren Programminstruktionen umfasst kommunikativ mit einer Datenbank verbunden ist,
wobei der Prozessor bei einem Ausführen der Programminstruktionen folgendes Erkennungsverfahren steuert:
   - Erfassen von Besucher beim Betreten der Veranstaltungsstätte durch den zumindest einen Eingang unter Verwendung von ein oder mehreren Überwachungskameras,
      wobei für jeden der Besucher eine Kombination charakteristischer Attribute erfasst wird, anhand derer der entsprechenden Besucher eindeutig identifiziert werden kann,
      wobei für jeden der erfassten Besucher ferner eine eindeutige ID erstellt, den für den entsprechenden Besucher erfassten Attributen zugeordnet und zusammen mit den zugeordneten Attributen zur Speicherung an die Datenbank gesendet wird,
   - wiederholt eine Anwesenheitsliste aller erfassten Besucher zu aktualisieren, welche sich in dem ersten Aufenthaltsbereich aufhalten, wobei das Aktualisieren der Anwesenheitsliste ein Identifizieren aller erfassten Besucher umfasst, welche den ersten Aufenthaltsbereich durch einen der Zugänge betreten oder verlassen,
      wobei das Identifizieren eines erfassten Besuchers, welcher den ersten Aufenthaltsbereich betritt oder verlässt, jeweils ein Erfassen der charakteristischen Attribute des entsprechenden Besuchers unter Verwendung von ein oder mehreren Überwachungskameras, einen Zugriff auf die Datenbank und ein Bestimmen der den erfassten Attributen zugeordneten ID umfasst,
   - Erfassen, wenn der pyrotechnische Gegenstand innerhalb des ersten Aufenthaltsbereichs gezündet wird, unter Verwendung zumindest eines der IR-Sensoren,
   - auf das Erfassen des Zündens des pyrotechnischen Gegenstands hin, Analysieren von ersten Aufnahmen des ersten Aufenthaltsbereichs und der sich in dem ersten Aufenthaltsbereich aufhaltenden Besucher, welche unmittelbar vor dem Zünden unter Verwendung von ein oder mehreren Überwachungskameras gemacht wurden,
      wobei das Analysieren ein Identifizieren aller auf den ersten Aufnahmen identifizierbaren Besucher umfasst, für welche charakteristische Attribute auf den ersten Aufnahmen erkannt werden können und für welche eine den erkannten Attributen zugeordnete ID bestimmt werden kann,
   - Bestimmen der IDs aller auf den ersten Aufnahmen nicht identifizierbarer Besucher, welche zum Zeitpunkt der Erstellung der analysierten ersten Aufnahmen gemäß der Anwesenheitsliste in dem ersten Aufenthaltsbereich anwesend waren, wobei das Bestimmen einen Abgleich der von der Anwesenheitsliste umfassten IDs mit den IDs der auf den ersten Aufnahmen identifizierten Besucher umfasst,
   - Bestimmen von ein oder mehrerer der auf den ersten Aufnahmen nicht identifizierbarer Besucher als die ein oder mehreren potentiellen Nutzer des pyrotechnischen Gegenstands,
   - Erkennen der ein oder mehreren potentiellen Nutzer beim Verlassen der Veranstaltungsstätte durch den zumindest einen Ausgang unter Verwendung von ein oder mehreren Überwachungskameras, wobei das Erkennen der ein oder mehreren potentiellen Nutzer ein Erfassen der charakteristischen Attribute umfasst, welche den IDs der ein oder mehreren potentiellen Nutzer zugeordnet sind,
   - auf ein Erkennen eines der potentiellen Nutzers hin, Erstellen und Senden eines Erkennungssignals.

Ausführungsformen können den Vorteil haben, dass unter Verwendung eines entsprechenden elektronischen Systems ein zuverlässiges und effizientes automatisches Identifizieren potenzieller Nutzer eines pyrotechnischen Gegenstands bereitgestellt werden kann. Das elektronische System ist dazu konfiguriert, die vorgenannten Ausführungsformen des Verfahrens zu implementieren.

Nach Ausführungsformen ist das Computersystem des elektronischen Systems dazu konfiguriert, das Erkennungsverfahren selbst ausführt.

Nach Ausführungsformen wird das Erkennungssignal an ein oder mehrere mobile Kommunikationsgeräte gesendet.

Nach Ausführungsformen umfasst das elektronischen System eine Ausgangskontrollvorrichtung zur Kontrolle des zumindest einen Ausgangs der Veranstaltungsstätte mit einer Sperrvorrichtung zum Sperren des zumindest einen Ausgangs,
wobei das Erkennungssignal an die Ausgangskontrollvorrichtung gesendet wird,
wobei die Sperrvorrichtung dazu konfiguriert ist, auf ein Empfangen des Erkennungssignals den entsprechenden Ausgang zu sperren.

Nach Ausführungsformen umfasst Computersystem des elektronischen Systems ferner eine Schnittstelle zum Senden von Daten über ein Netzwerk und das Steuern des Verfahrens durch das Computersystem des elektronischen Systems umfasst:
Senden von Aufnahmen der Überwachungskameras und von Messdaten der IR-Sensoren über die Schnittstelle und das Netzwerk an ein Servercomputersystem nach einer der zuvor beschriebenen Ausführungsformen, wobei das Servercomputersystem das Erkennungsverfahren ausführt.

Unter einem "Computersystem" wird hier ein Gerät verstanden, welches mittels programmierbarer Rechenvorschriften unter Verwendung elektronischer Schaltkreise Daten verarbeitet. Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Ein Computersystem kann eine Schnittstelle zur Verbindung mit dem Netzwerk umfassen, wobei es sich bei dem Netzwerk um ein privates oder öffentliches Netzwerk handeln kann, insbesondere das Internet oder ein anderes Kommunikationsnetz. Je nach Ausführungsform kann diese Verbindung auch über ein Mobilfunknetz hergestellt werden.

Unter einem "Speicher" bzw. "Datenspeicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarere Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist. Unter einer Kommunikationsschnittstelle zur drahtlosen Kommunikation wird eine Kommunikationsschnittstelle, welche zum kontaktlosen Senden und Empfangen von Daten konfiguriert ist. Die Kommunikation kann beispielsweise nach einem RFID- und/oder NFC-Standard, wie etwa Bluetooth, erfolgen. Ferner kann die Kommunikationsschnittstelle zur Kommunikation über ein lokales Funknetz konfiguriert sein, beispielsweise nach einem Standard der IEEE-802.11-Familie und/oder Wi-Fi.

Eine Schnittstelle kann beispielsweise als Funkschnittstelle konfiguriert sein, welche eine Kommunikation über ein digitales zellulares Mobilfunknetzwerk ermöglicht, das nach einem Mobilfunkstandard wie zum Beispiel GSM, UMTS, LTE, CDMA oder einem anderen Standard aufgebaut sein kann

Eine Kommunikation kann im Allgemeinen beispielsweise über ein Netzwerk erfolgen. Unter einem "Netzwerk" wird hier jedes Übertragungsmedium mit einer Anbindung zur Kommunikation verstanden, welche eine Kommunikation zwischen zumindest zwei Computersystemen ermöglicht. Ein Netzwerk kann beispielsweise ein lokales Netzwerk, insbesondere ein Local Area Network (LAN), ein privates Netzwerk, insbesondere ein Intranet, oder ein virtuelles privates Netzwerk (Virtual Private Network - VPN) umfassen. Beispielsweise kann das Computersystem eine Standardfunkschnittstelle zur Anbindung an ein WLAN aufweisen. Ferner kann es sich um ein öffentliches Netzwerk, wie beispielsweise das Internet handeln.

Im Weiteren werden Ausführungsformen der Erfindung mit Bezugnahme auf die Zeichnungen näher erläutert. Es zeigen:
- Fig. 1: ein schematisches Blockdiagramm einer Veranstaltungsstätte,
- Fig. 2: ein schematisches Blockdiagramm von Eingängen und Ausgängen der Veranstaltungsstätte aus Fig. 1,
- Fig. 3: ein schematisches Blockdiagramm eines Aufenthaltsbereichs der Veranstaltungsstätte aus Fig. 1,
- Fig. 4: ein schematisches Blockdiagramm des Aufenthaltsbereichs aus Fig. 3,
- Fig. 5: ein schematisches Blockdiagramm einer ersten exemplarischen Aufnahme der Besucher eines Aufenthaltsbereichs aus Fig. 3,
- Fig. 6: ein schematisches Diagramm des Zeitablaufs der Aufnahmen des Aufenthaltsbereichs aus Fig. 3,
- Fig. 7: ein schematisches Blockdiagramm der Auswertung der Anwesenheitsliste,
- Fig. 8: ein schematisches Diagramm des Zeitablaufs der Besucher des Aufenthaltsbereichs aus Fig. 3,
- Fig. 9: ein schematisches Blockdiagramm der Auswertung der Anwesenheitsliste,
- Fig. 10: ein schematisches Blockdiagramm einer zweiten exemplarischen Aufnahme der Besucher des Aufenthaltsbereichs aus Fig. 3,
- Fig. 11: ein schematisches Blockdiagramm einer dritten exemplarischen Aufnahme der Besucher des Aufenthaltsbereichs aus Fig. 3,
- Fig. 12: ein schematisches Blockdiagramm einer ersten exemplarischen Ausführungsform eines elektronischen Systems zum automatischen Identifizieren potenzieller Nutzer,
- Fig. 13: ein schematisches Blockdiagramm einer zweiten exemplarischen Ausführungsform eines elektronischen Systems zum Identifizieren potenzieller Nutzer,
- Fig. 14: ein schematisches Flussdiagramm eines ersten exemplarischen Verfahrens,
- Fig. 15: ein schematisches Flussdiagramm eines zweiten exemplarischen Verfahrens und
- Fig. 16: ein schematisches Flussdiagramm eines dritten exemplarischen Verfahrens.

Elemente der nachfolgenden Ausführungsformen, die einander entsprechen, werden mit denselben Bezugszeichen gekennzeichnet.

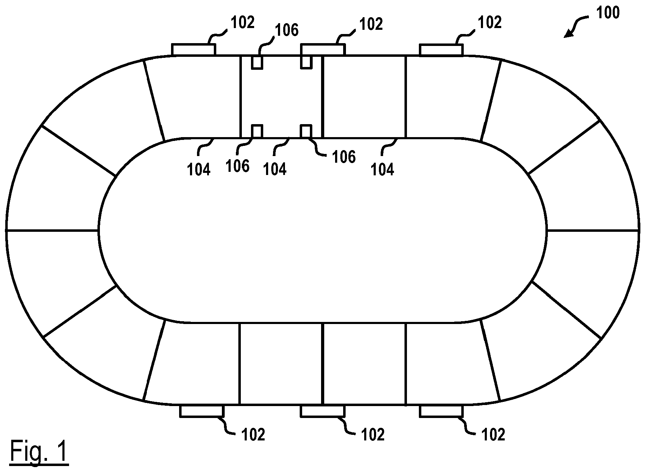

Fig. 1 zeigt ein schematisches Blockdiagramm einer exemplarischen Ausführungsform einer Veranstaltungsstätte 100 in Form eines Stadions. Die Zuschauerränge des Stadions sind in eine Mehrzahl von Blöcken 104 unterteilt, welche räumlich begrenzt sind und nur über dazu vorgesehene Zugänge 106 betreten und verlassen werden können. Ferner weist die Veranstaltungsstätte eine Mehrzahl von Eingängen bzw. Ausgängen 102 zum Betreten bzw. Verlassen der Veranstaltungsstätte 100 auf. Möchten Besucher die Veranstaltungsstätte 100 betreten oder verlassen, so ist dies nur über die Ein- bzw. Ausgänge 102 möglich, ebenso ist ein Betreten oder Verlassen der einzelnen Aufenthaltsbereiche 104 nur durch die entsprechenden Zugänge 106 möglich.

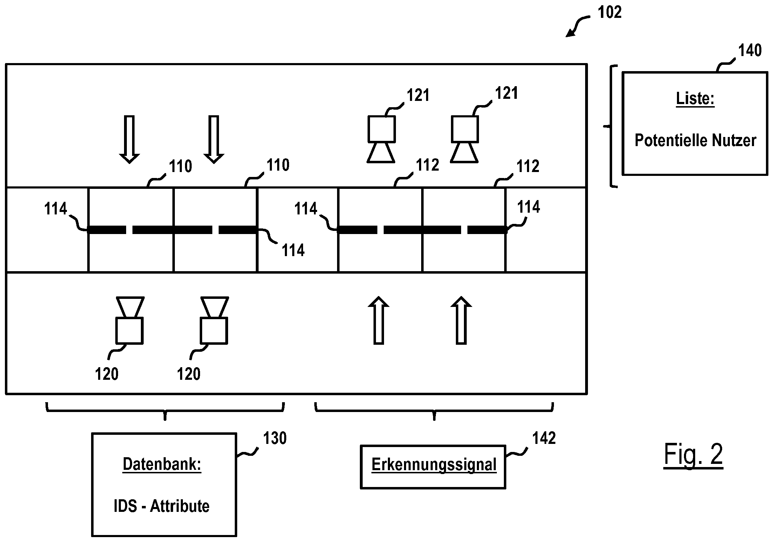

Fig. 2 zeigt ein schematisches Blockdiagramm eines exemplarischen Eingangs bzw. Ausgangs 102 der Veranstaltungsstätte 100 aus Fig. 1. Möchten Besucher die Veranstaltungsstätte 100 betreten, so ist dies beispielsweise nur durch die von den Überwachungskameras 120 überwachten Eingangsbereiche 110 möglich. Die Eingangsbereiche 110 umfassen jeweils eine Kontrollvorrichtung mit einer Sperrvorrichtung 114, welche den Zutritt zu der Veranstaltungsstätte 100 kontrollieren. Anhand der mittels der Überwachungskameras 120 erfassten Attribute der über die Eingangsbereiche 110 die Veranstaltungsstätte 100 betretenden Besucher wird eine Datenbank 130 mit den IDs und den zugeordneten Attributen aller die Veranstaltungsstätte betretenden Besucher angelegt. Möchten die Besucher die Veranstaltungsstätte 100 wieder verlassen, so ist dies nur durch die Ausgangsbereiche 112 möglich. Die entsprechenden Ausgangsbereiche 112 werden ebenfalls mit Überwachungskameras 120 überwacht. Zudem können die Ausgangsbereiche 112 jeweils eine Kontrollvorrichtung mit einer Sperrvorrichtung 114 aufweisen, welche gegebenenfalls einen Bereich sperrt und dadurch ein Verlassen der Veranstaltungsstätte durch einen potenziellen Nutzer eines pyrotechnischen Gegenstands verhindert. Es wird eine Liste 140 der potenziellen Nutzer eines pyrotechnischen Gegenstands bereitgestellt. Wird einer der von der Liste umfassten potenziellen Nutzer beim Verlassen der Veranstaltungsstätte 100 durch einen der Ausgangsbereiche 112 erkannt, so wird ein Erkennungssignal 142 erstellt. Auf das entsprechende Erkennungssignal hin wird beispielsweise der Ausgang durch die Sperrvorrichtung 114, welche der Überwachungskamera 120 zugeordnet ist, auf deren Aufnahme der potenziellen Nutzer erkannt wurde, gesperrt. Somit wird der potenzielle Nutzer, welcher die Veranstaltungsstätte durch die Sperrvorrichtung 114 verlassen wollte, am Verlassen gehindert.

Die Pfeile in Fig. 2 zeigen eine vorgesehene Bewegungsrichtung der Besucher beim Betreten bzw. Verlassen der Veranstaltungsstätte an. Nach weiteren Ausführungsformen können die Bereiche 110 und 112 auch sowohl als Eingangs- als auch als Ausgangsbereiche ausgelegt sein. In diesem Fall sind Überwachungskameras 120 notwendig, welche in beide Richtungen angeordnet sind, so dass Besucher sowohl beim Betreten als auch beim Verlassen erfasst werden können.

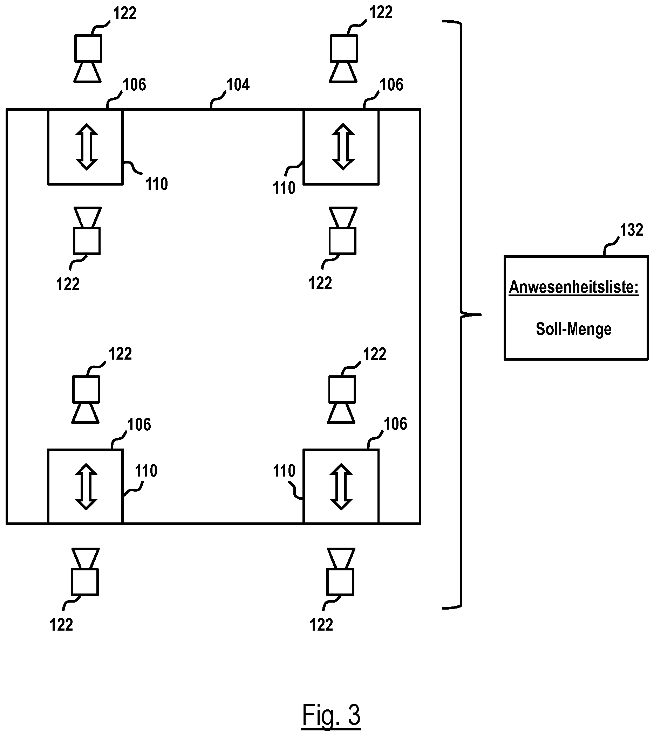

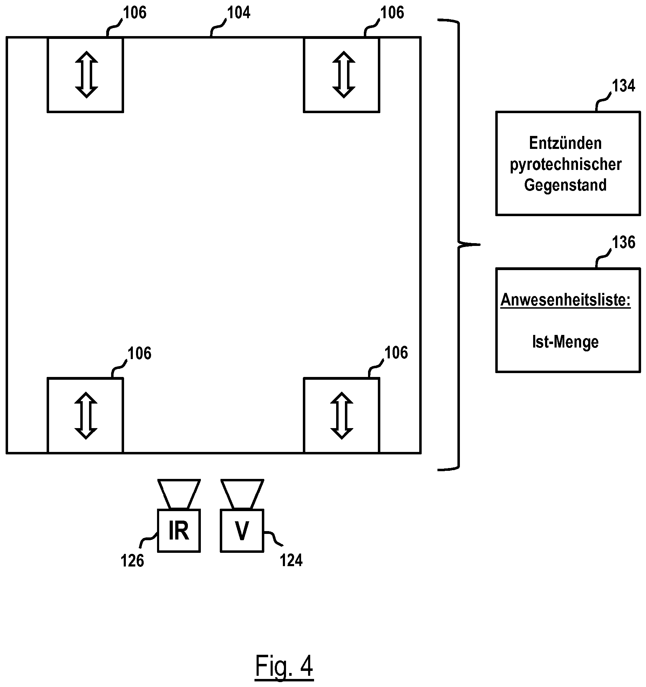

Fig. 3 zeigt ein schematisches Blockdiagramm eines Aufenthaltsbereichs 104 der Veranstaltungsstätte 100 aus Fig. 1. Der Aufenthaltsbereich 104 kann durch die Zugänge 106 betreten werden. Diese Zugangsbereiche 110 werden jeweils von ein oder mehreren Überwachungskameras 122 überwacht. In der dargestellten Ausführungsform dienen die Zugänge 106 sowohl als Eingang zu wie auch als Ausgang aus dem Aufenthaltsbereich 104. Nach weiteren Ausführungsformen können einzelne Zugänge 106 auch exklusiv nur als Zugänge oder Ausgänge konfiguriert sein. Anhand der Aufnahmen der Überwachungskameras 122 kann erfasst werden, welcher der an der Veranstaltungsstätte 100 erfassten Besucher den entsprechenden Aufenthaltsbereich 104 betritt oder verlässt. Durch wiederholtes Aktualisieren einer entsprechenden Anwesenheitsliste 132, jedes Mal, wenn ein Besucher den Aufenthaltsbereich betritt oder verlässt, stehen stets aktuelle Informationen darüber zur Verfügung, wer sich in dem Aufenthaltsbereich 104 aufhalten sollte. Zudem wird der Aufenthaltsbereich 104, wie in Fig. 4 gezeigt, mit zusätzlichen Überwachungskameras 124 überwacht. Bei den Überwachungskameras 124 kann es sich beispielsweise um hochauflösende Überwachungskameras handeln, welche den gesamten Aufenthaltsbereich abdecken, so dass anhand der von ihnen bereitgestellten Aufnahmen identifiziert werden kann, welche Besucher in dem Aufenthaltsbereich 104 erkennbar sind. Ferner kann ein Infrarotsensor 126, beispielsweise eine Wärmebildkamera, bereitgestellt werden, welche das Auftreten einer Wärmequelle mit einer von der Umgebungstemperatur abweichenden Temperatur erkennen kann. Wird ein pyrotechnischer Gegenstand, beispielsweise eine Handfackel, welche ein bengalisches Feuer mit über 1500°C bereitstellt, entzündet, wird dieses Entzünden protokolliert 134. Anhand von Aufnahmen des Aufenthaltsbereichs kurz vor dem Entzündens 134 des pyrotechnischen Gegenstands kann eine Anwesenheitsliste 136 erstellt werden, welche eine Ist-Menge aller in dem Aufenthaltsbereich 104 identifizierbaren Besucher umfasst.

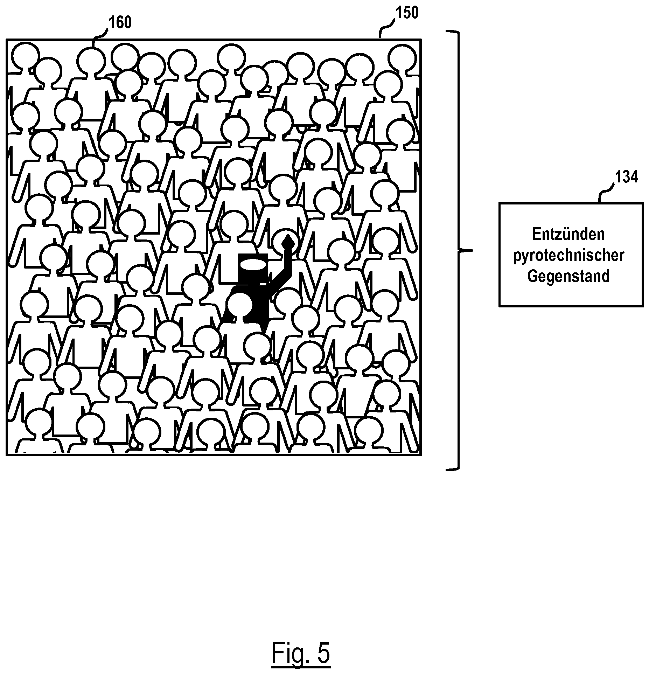

Fig. 5 zeigt eine schematische Ansicht einer exemplarischen Aufnahme 150 des Aufenthaltsbereichs 104 zum Zeitpunkt des Entzündens des pyrotechnischen Gegenstands 134. Zum Zeitpunkt des Entzündens können die Aufnahmen aufgrund der intensiven Licht- und/oder Rauchentwicklung kaum oder gar nicht analysiert werden.

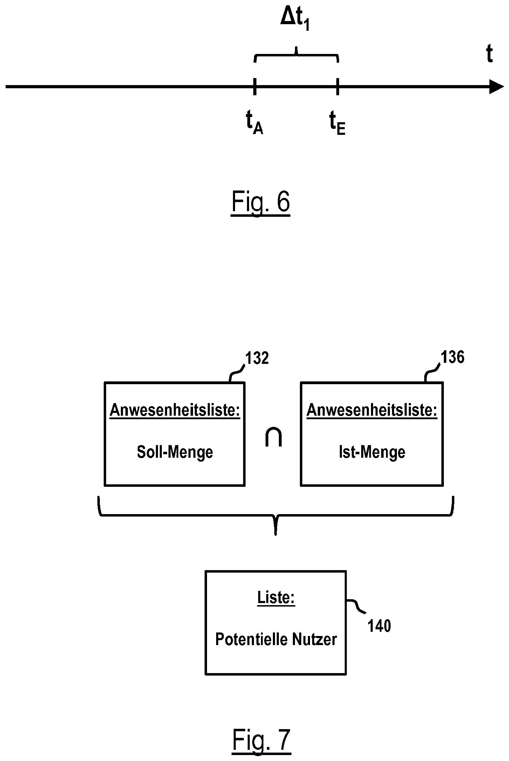

Daher werden, wie in Fig. 6 schematisch gezeigt, beispielsweise Aufnahmen für die Analyse verwendet, welche nicht zum Zeitpunkt des Entzündens des pyrotechnischen Gegenstands t_{E}, sondern zu einem Zeitpunkt t_{A} davor erstellt wurden. Der Zeitpunkt t_{A} liegt dabei beispielswiese um eine Zeitspanne Δt₁ vor der Zeit t_{E}. Bei Δt₁ kann es sich beispielseiweise um Sekunden und/oder Minuten handeln. Aus der Anwesenheitsliste 132, welche die Soll-Menge aller in den Aufnahmen zum Zeitpunkt t_{A} identifizierbaren Besucher bildet, kann durch Schnittmengenbildung mit der Anwesenheitsliste 136 aller tatsächlich zum Zeitpunkt t_{A} identifizierbaren Besucher in dem Aufenthaltsbereich eine Liste 140 erstellt werden, welche alle diejenigen Nutzer umfasst, die auf den Aufnahmen nicht identifiziert werden konnten. Durch diese in Fig. 7 exemplarisch dargestellte Schnittmengenbildung kann eine Gruppe potenzieller Nutzer bestimmt werden, welche wesentlich kleiner als die Gesamtmenge aller zum Zeitpunkt des Entzündens des pyrotechnischen Gegenstands in dem Aufenthaltsbereich anwesenden Besucher ist.

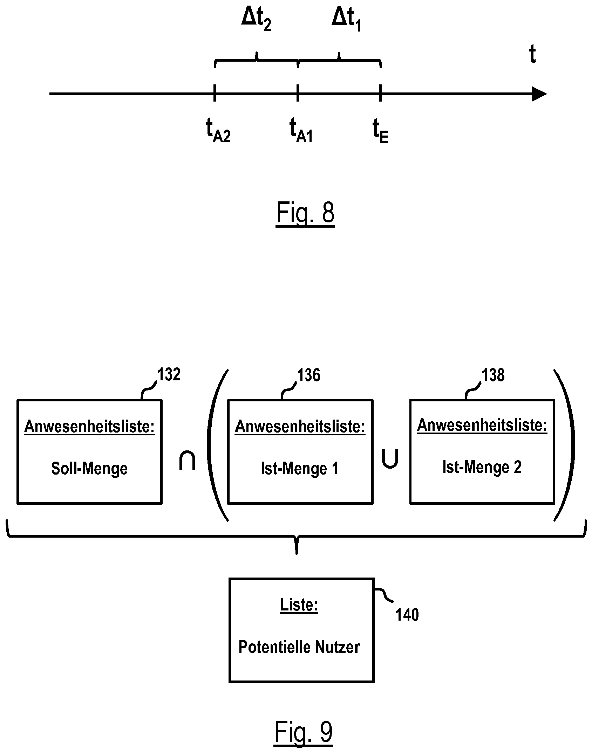

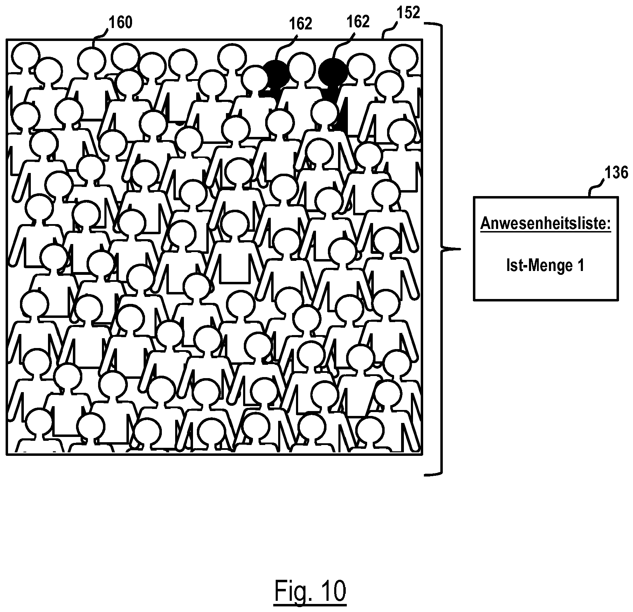

Wie in den Figuren gezeigt, kann die Liste potentieller Nutzer 140 weiter reduziert werden, indem beispielsweise durch eine zeitliche Zurückverfolgung des Verhaltens der potenziellen Nutzer einzelne von diesen als tatsächlicher Nutzer ausgeschlossen werden können. Hierzu werden für die Analyse beispielsweise weitere Aufnahmen der Überwachungskameras des Aufenthaltsbereichs herangezogen, welche zu einem Zeitpunkt t_{A2} erstellt wurden, der um eine Zeitspanne Δt₂ vor dem Zeitpunkt t_{A1} der Erstellung der anderen analysierten Aufnahmen liegt. Bei Δt₂ kann es sich beispielseiweise um Sekunden und/oder Minuten handeln. Auf diesen früheren Aufnahmen können beispielsweise Nutzer identifizierbar sein, welche auf den anderen Aufnahmen, die zu dem anderen Zeitpunkt erstellt wurden, nicht eindeutig identifizierbar waren. Somit kann, wie in Fig. 9 gezeigt, aus den Anwesenheitslisten der identifizierbaren Besucher zu den unterschiedlichen Zeitpunkten t_{A1} und t_{A2} eine Vereinigungsmenge gebildet werden. Aus der Schnittmenge dieser Vereinigungsmenge der Listen 136, 138 mit der Anwesenheitsliste der Besucher, die tatsächlich anwesend waren, kann der potenzielle Nutzer weiter eingeschränkt werden. Wie in Fig. 10 gezeigt, können auf einer Aufnahme 152 einzelne Besucher 162 nicht identifizierbar sein im Gegensatz zu anderen Besuchern 160. Bei den nicht identifizierbaren Besuchern 162 kann es sich beispielsweise um Besucher handeln, welche von ihren Vorderleuten verdeckt werden, so dass zwar einzelne Attribute erfassbar sind, diese jedoch für eine eindeutige Identifizierung nicht ausreichen. Durch Analyse der Aufnahme 152 kann eine Anwesenheitsliste 136 aller auf der Aufnahme 152 identifizierbaren Besucher erstellt werden. Der tatsächliche Nutzer des pyrotechnischen Gegenstands ist auf der Aufnahme in Fig. 10 nicht zu sehen, da er sich beispielsweise zum Maskieren duckt. In anderen Fällen könnte der tatsächliche Nutzer des pyrotechnischen Gegenstands sichtbar, aber aufgrund einer bereits angelegten Maskierung nicht mehr identifizierbar sein.

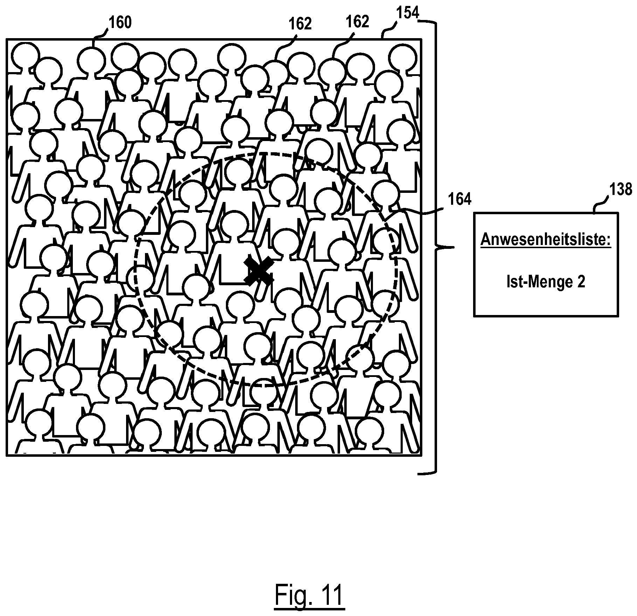

Fig. 11 zeigt eine zweite Aufnahme 154 der Besucher des Aufenthaltsbereichs 104. Diese Aufnahme 154 wurde zu einem früheren Zeitpunkt als die Aufnahme 152 aus Fig. 10 erstellt. Auf der früher erstellten Aufnahme 154 sind die Personen 162 beispielsweise identifizierbar. Wird zum Erfassen der Wärmequelle ein Infrarotsensor verwendet, welcher beispielsweise von einer Wärmebildkamera bereitgestellt wird, so kann anhand der Bilder der Wärmebildkamera eine eindeutige Position des Zündens des pyrotechnischen Gegenstands bestimmt werden. Diese Position kann auf die Aufnahme 154 übertragen werden. Um die Position des Entzündens herum kann ein Abstandsbereich 164 festgelegt werden, innerhalb dessen es Besuchern 160 möglich war, in dem bis zum Entzünden des pyrotechnischen Gegenstands verbleibenden Zeitraum von Δt =Δt₁ + Δt₂ bis zur Position der Entzündung zu gelangen und somit als potenzieller Nutzer in Frage zu kommen. Die beiden zuvor nicht identifizierbaren Nutzer 162 sind auf der Aufnahme 154 identifizierbar und befinden sich außerhalb des Abstandsbereichs 164. Es war den Nutzern 162 somit nicht möglich, rechtzeitig an die Position des Entzündens des pyrotechnischen Gegenstands zu gelangen, womit sie als potenzielle Nutzer ausscheiden.

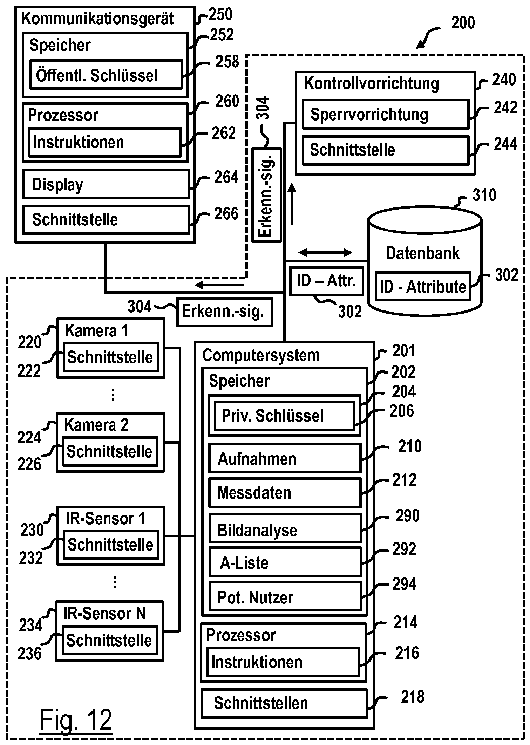

Fig. 12 zeigt ein schematisches Blockdiagramm eines elektronischen Systems 200 zum automatischen Identifizieren von potenziellen Nutzern des pyrotechnischen Gegenstands. Das elektronische System 200 umfasst beispielsweise Überwachungskameras 220, 224. Die Überwachungskameras 220, 224 sind über Schnittstellen 222, 226 mit einem Computersystem 201 des elektronischen Systems 200 verbunden. Ferner umfasst das elektronische System 200 beispielsweise Infrarotsensoren 230, 234. Sensoren 230, 234 sind ebenfalls über Schnittstellen 232, 236 mit dem Computersystem 201 verbunden. Das Computersystem 201 umfasst Schnittstellen 218 zum Empfang von Aufnahmen der Kameras 220, 224 sowie von Messdaten der Infrarotsensoren 230, 234. Ferner umfasst das Computersystem einen Prozessor 244, welcher dazu konfiguriert ist, Programminstruktionen 216 auszuführen. Ein Ausführen der Programminstruktionen 216 durch den Prozessor 214 veranlasst das Computersystem, das elektronische System 200 so zu steuern, dass eines der zuvor beschriebenen Verfahren ausgeführt wird. Hierzu umfasst das Computersystem 201 ferner einen Speicher 202. Der Speicher 202 umfasst die von den Kameras 220, 224 bereitgestellten Aufnahmen 210 sowie den von den Infrarotsensoren 230, 234 empfangenen Messdaten 212. Ferner umfasst der Speicher Programminstruktionen 290 für eine Bildanalyse zum Erfassen von Attributen von Besuchern auf den Aufnahmen 210. Zudem kann durch ein Ausführen der Programminstruktionen des Bildanalyseprogramms 290 das Auftreten eines entzündeten pyrotechnischen Gegenstands als zusätzliche und/oder ungewöhnliche Wärmequelle im Aufenthaltsbereich 204 erfassen. Unter Verwendung des Bildanalyseprogramms 290 werden beim Betreten der Veranstaltungsstätte 200 für alle Besucher jeweils eine Kombination charakteristischer Attribute erfasst und diese einer für den entsprechenden Besucher bzw. Nutzer erstellten temporären ID zugeordnet. Die entsprechenden Datensätze 302 werden in einer Datenbank 310 gespeichert. Diese Datenbank 310 kann von dem Computersystem 201 umfasst sein oder mit diesen über die Schnittstellen 218 in Kommunikationsverbindung stehen. Ferner wird eine Anwesenheitsliste 292 erstellt und wiederholt aktualisiert. Nach Ausführungsformen kann die Entwicklung der Aufenthaltsliste 292 ebenfalls in der Datenbank 310 protokolliert werden. Somit kann im Nachhinein zu jedem Zeitpunkt festgestellt werden, welche der Nutzer sich in dem entsprechenden Aufenthaltsbereich aufgehalten haben. Durch einen Abgleich der Aufenthaltsliste 292, der sich zum Zeitpunkt des Entzündens des pyrotechnischen Gegenstands in dem Aufenthaltsbereich befunden haben, mit denjenigen Besuchern, welche auf Aufnahmen der Kameras kurz vor dem Entzünden des pyrotechnischen Gegenstands identifizierbar sind, kann eine Liste 294 erstellt werden. Diese Liste der potenziellen Nutzer 294 kann beispielsweise über die Schnittstellen 218 des Computersystems 201 an Kommunikationsgeräte 250 des Sicherheitsdiensts gesendet werden.

Wird durch eine der Kameras 220, 224 ein potenzieller Nutzer gemäß der Liste 294 beim Verlassen der Veranstaltungsstätte erkannt, wird ein Erkennungssignal 304 durch das Computersystem 201 erstellt. Dieses wird beispielsweise an die Kontrollvorrichtung 240 gesendet. Die Kontrollvorrichtung 240 umfasst eine Sperrvorrichtung 242 und ist über eine Schnittstelle 244 mit den Schnittstellen 218 des Computersystems 201 kommunikativ verbunden. Auf einen Empfang des Sperrsignals durch die Kontrollvorrichtung 240 hin wird die Sperrvorrichtung 242 von der Kontrollvorrichtung 240 so angesteuert, dass der Ausgang für den erkannten potenziellen Nutzer gesperrt wird. Ferner wird das Sperrsignal an die Kommunikationsgeräte 250 des Sicherheitsdienstes gesendet. Hierbei kann es sich beispielsweise um mobile Kommunikationsgeräte 250 handeln, an welche Daten drahtlos übermittelt werden. Die so übermittelten Daten können beispielsweise mit einem privaten Schlüssel 206, welcher in einem geschützten Speicherbereich des Speichers 202 gespeichert ist, der nur über den Prozessor 214 des Computersystems 201 zugänglich ist, verschlüsselt werden. Verfügen die Kommunikationsgeräte 250 über einen dem privaten Schlüssel 206 zugeordneten öffentlichen Schlüssel 258 zum Entschlüsseln des empfangenen Erkennungssignals 304, können die Kommunikationsgeräte 250 das empfangene Erkennungssignal 304 durch Ausführen der Programminstruktion 262 durch den Prozessor 260 entschlüsseln und auf einem Display 264 darstellen. Beispielsweise umfasst das Erkennungssignal 304 ein Bild des erkannten potenziellen Nutzers, welches auf dem Display 264 dargestellt wird. Anhand des dargestellten Bilds auf dem Display 264 kann das Sicherheitspersonal den potenziellen Nutzer am Ausgang effektiv zu weiteren Untersuchungen ausfindig machen.

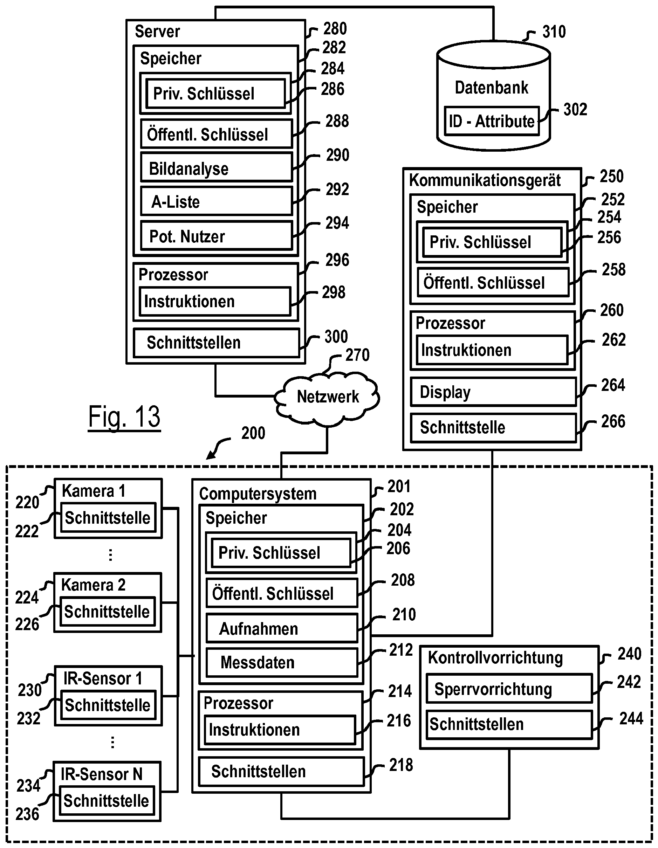

Fig. 13 zeigt ein schematisches Blockdiagramm einer zweiten Ausführungsform des elektronischen Systems 200. Das elektronische System 200 umfasst wiederum Kameras 220, 224, IR-Sensoren 230, 234, ein Computersystem 201 sowie ein oder mehrere Kontrollvorrichtungen 240. Das Computersystem 201 ist im Gegensatz zu der Ausführungsform des Computersystems 201 aus Fig. 12 nicht dazu konfiguriert, die von den Kameras 220, 224 bereitgestellten Aufnahmen 210 oder die von den IR-Sensoren 230, 234 bereitgestellten Messdaten 212 zu analysieren bzw. auszuwerten. Hierzu sendet das Computersystem die entsprechenden Aufnahmen über ein Netzwerk 270, beispielsweise das Internet oder ein Intranet, an ein Servercomputersystem 280. Das Servercomputersystem 280 umfasst einen Prozessor 296 mit Programminstruktion 298 zum Analysieren bzw. Auswerten von Aufnahmen 210 und Messdaten 212 der Kameras 220, 224 sowie der IR-Sensoren 230, 234. Nach Ausführungsform werden die auszuwertenden Aufnahmen 210 und Messdaten 212 mit einem privaten Schlüssel 206 des Computersystems 201 verschlüsselt über das Netzwerk 270 an ein Servercomputersystem 280 gesendet, welches die gesendeten Daten empfängt. Die empfangenen Daten werden mit dem dem privaten Schlüssel 206 zugeordneten öffentlichen Schlüssel 288 entschlüsselt. Der entsprechende öffentliche Schlüssel 288 ist in einem Speicher 282 des Servercomputersystems 280 gespeichert. Ferner umfasst der Speicher 282 des Servercomputersystems 280 ein Programm mit Programminstruktionen zum Ausführen einer Bildanalyse 290 von Aufnahmen 210 und/oder Messdaten 212. Die Aufnahmen 210 der Eingänge der Veranstaltungsstätte werden von dem Computersystem 201 über das Netzwerk 270 an das Servercomputersystem 280 gesendet. Das Servercomputersystem 280 stellt eine Analyse bzw. eine Auswertung der empfangenen Aufnahmen beispielsweise in Form einer Cloud-Lösung bereit. Die empfangenen Aufnahmen werden analysiert, für die Besucher, welche die Veranstaltungsstätten betreten, wird jeweils eine Kombination charakteristischer Attribute erfasst. Ist die erfasste Kombination charakteristischer Attribute unbekannt, d.h. umfasst die Datenbank 310 die entsprechende Kombination noch nicht, so wird dieser eine neue ID zugeordnet. Die ID zusammen mit den entsprechenden Attributen wird als Datensatz 302 in der Datenbank 310 gespeichert. Die Datenbank 310 kann Teil des Servercomputersystems 280 sein und/oder mit diesem kommunikativ über eine Datenverbindung verbunden sein. Beispielsweise kann die Datenbank 310 auch über das Netzwerk 270 mit dem Servercomputersystem 280 verbunden sein. Ferner wird durch das Servercomputersystem 280 eine Anwesenheitsliste 292 für jeden Aufenthaltsbereich der Veranstaltungsstätte erstellt. Die Anwesenheitslisten werden wiederholt aktualisiert, so dass diese stets den aktuellen Stand der Besucher umfasst, welche sich zu einem gegebenen Zeitpunkt in dem entsprechenden Aufenthaltsbereich befinden sollten. Die zeitliche Entwicklung der Anwesenheitsliste 292 wird beispielsweise ebenfalls in der Datenbank 310 gespeichert. Somit kann für jeden Zeitpunkt in der Vergangenheit festgestellt werden, welche Besucher sich zu einem gegebenen Zeitpunkt in dem Aufenthaltsbereich befunden haben sollten. Wird ein pyrotechnischer Gegenstand in dem Aufenthaltsbereich gezündet, so wird dies durch eine Analyse der von dem Computersystem 201 bereitgestellten Messdaten 212 erfasst. Ferner werden Aufnahmen 210 der Überwachungskameras 220, 224 des Aufenthaltsbereichs zu einem Zeitpunkt kurz vor dem Entzünden des pyrotechnischen Gegenstands analysiert und alle auf diesen Aufnahmen identifizierbaren Besucher identifiziert. Durch einen Vergleich der identifizierbaren Besucher mit den Besuchern, die gemäß der Anwesenheitsliste 292 zum Zeitpunkt der Aufnahme anwesend sein sollten, können all jene Besucher identifiziert werden, welche anwesend waren, aber auf den Aufnahmen nicht identifizierbar sind. Aus dieser Gruppe der nicht identifizierbaren Besucher kann eine Liste mit einem oder mehreren potenziellen Nutzern des pyrotechnischen Gegenstands bestimmt werden. Diese Liste kann beispielsweise über das Netzwerk 270 in verschlüsselter Form an das Computersystem 201 gesendet werden. Hierzu wird die Liste beispielsweise mit einem privaten Schlüssel 286 in das Computerserversystem 280 verschlüsselt, welcher in einem geschützten Speicherbereich 284 des Speichers 282 gespeichert ist. Das Computersystem 201 kann die empfangenen Daten mittels eines zugeordneten öffentlichen Schlüssels 208 entschlüsseln. Nach Ausführungsform kann zur Kommunikation zwischen dem Computersystem 201 und dem Servercomputersystem 280 eine Ende-zu-Ende verschlüsselte Kommunikationsverbindung über das Netzwerk 270 aufgebaut werden. Wird auf einer der Aufnahmen 210, welche für Besucher beim Verlassen der Veranstaltungsstätte erstellt werden, einer der potenziellen Nutzer 294 erkannt, so erstellt das Servercomputersystem ein Erkennungssignal und sendet dieses beispielsweise über das Netzwerk 270 an das Computersystem 201. Das Computersystem 201 kann das entsprechende Erkennungssignal beispielsweise an eine Kontrollvorrichtung 240 weiterleiten, welche wie zuvor beschrieben ein Erkennungssignal 242 zum Sperren des Ausgangs umfasst. Ferner kann das Servercomputersystem das Sperrsignal über das Netzwerk 270 an ein oder mehrere mobile Kommunikationsgeräte 250 des Sicherheitsdienstes senden.

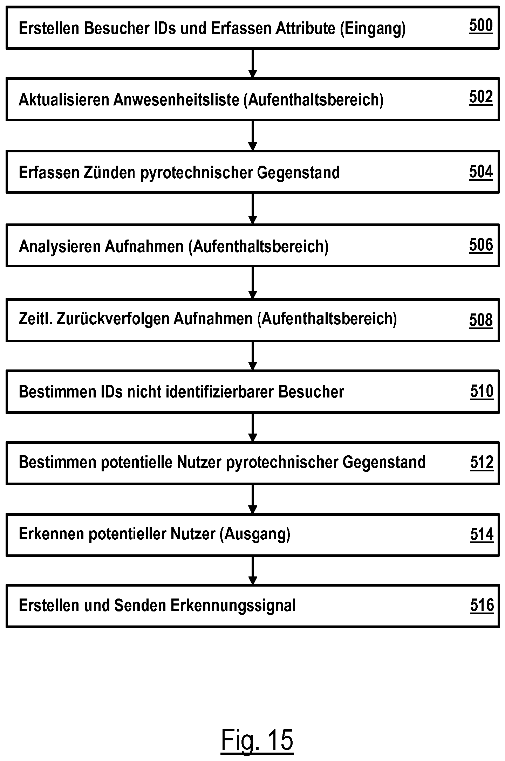

Fig. 15 zeigt ein schematisches Flussdiagramm eines ersten exemplarischen Verfahrens. In Schritt 400 werden IDs der Besucher erstellt, welche die Veranstaltungsstätte durch einen der Eingänge betreten. Ferner werden Attribute der Besucher erfasst und den IDs zugeordnet. Die Datensätze aus IDs und zugehörigen Attributen werden gespeichert. In Schritt 402 wird für jeden Aufenthaltsbereich der Veranstaltungsstätte jeweils eine Anwesenheitsliste wiederholt aktualisiert. Beispielsweise wird die veraltete Version der Anwesenheitsliste bei jedem Aktualisierungsvorgang gespeichert. Dies erlaubt es zu verfolgen, wann welche Besucher in dem Aufenthaltsbereich anwesend waren. In Schritt 404 wird ein Zünden eines pyrotechnischen Gegenstands erfasst. Daraufhin wird in Schritt 406 eine oder mehrere Aufnahmen des Aufenthaltsbereichs analysiert, welche zum Zeitpunkt des Entzündens des pyrotechnischen Gegenstandes und/oder kurz zuvor aufgenommen wurden. Im Zuge der Analyse werden alle auf den Aufnahmen identifizierbaren Besucher identifiziert. Durch einen Vergleich der identifizierbaren Besucher mit denjenigen Besuchern, welche gemäß der Aufenthaltsliste zum Zeitpunkt, als die Aufnahmen erstellt wurden, in dem Aufenthaltsbereich anwesend gewesen sein sollten, können in Schritt 408 durch Ausschlussverfahren die IDs der nicht identifizierbaren Besucher bestimmt werden. Zum Identifizieren der Besucher im Zuge des Schritts 406 werden beispielsweise die in Schritt 400 erstellten Datensätze, welche beispielsweise in einer Datenbank abgespeichert sind, verwendet. In Schritt 410 wird auf Basis der bestimmten IDs der nicht identifizierbaren Besucher der potenzielle Nutzer des pyrotechnischen Gegenstands bestimmt. Beispielsweise werden alle nicht identifizierbaren Besucher als potenzielle Nutzer eingestuft. Nach weiteren Ausführungsformen können einzelne nicht identifizierbare Besucher beispielsweise durch eine zeitlich weiter zurückreichende Analyse weiterer Aufnahmen als potenzielle Nutzer ausgeschlossen werden. In Schritt 412 werden potenzielle Nutzer beim Verlassen der Veranstaltungsstätte an einem ihrer Ausgänge erkannt. Daraufhin wird in Schritt 414 ein Erkennungssignal erstellt und versandt. Das Erkennungssignal wird beispielsweise durch ein Computersystem erstellt, welches die Aufnahmen der Überwachungskameras am Ausgang auswertet. Dieses Computersystem kann beispielsweise Teil eines elektronischen Systems der Veranstaltungsstätte sein oder über ein Netzwerk mit dem elektronischen System der Veranstaltungsstätte verbunden sein. Das Erkennungssignal wird beispielsweise an eine Kontrollvorrichtung gesendet, welche mittels einer Sperrvorrichtung den Ausgang für den erkannten potenziellen Nutzer sperren kann. Durch ein entsprechendes Sperren wird verhindert, dass der entsprechende Nutzer die Veranstaltungsstätte verlassen kann. Ferner kann das Erkennungssignal beispielsweise an ein oder mehrere Kommunikationsgeräte, insbesondere mobile Kommunikationsgeräte, des Sicherheitsdienstes gesandt werden, so dass die Mitarbeiter des Sicherheitsdienstes in die Lage versetzt werden, den erkannten potenziellen Nutzer in einer größeren Menschenmenge am Ausgang der Veranstaltungsstätte ausfindig machen.

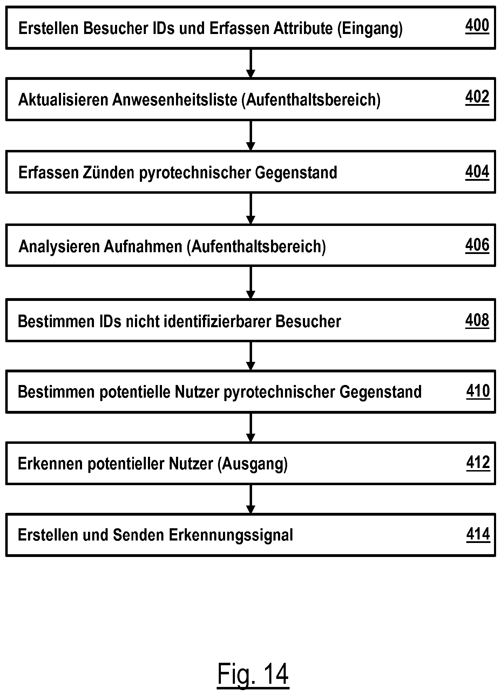

Fig. 15 zeigt ein exemplarisches Flussdiagramm einer exemplarischen Ausführungsform eines zweiten Verfahrens. Die Schritte 500 bis 506 entsprechen den Schritten 400 bis 406 aus Fig. 14. Fig. 15 weist zusätzlich den Schritt 508 auf, in welchem die Aufnahmen der Besucher des Aufenthaltsbereichs zeitlich weiter zurückverfolgt werden. Hierzu werden beispielsweise ältere Aufnahmen, welche vor den in Schritt 506 analysierten Aufnahmen erstellt wurden, herangezogen. Auf diesen älteren Aufnahmen können beispielsweise Besucher identifizierbar sein, welche auf den späteren Aufnahmen 506 nicht identifizierbar sind, beispielsweise weil nicht genügend Attribute erfasst werden können. Somit kann in Schritt 512 die Zahl der potenziellen Nutzer verringert werden im Vergleich zu dem Verfahren gemäß Fig. 14. Die weiteren Schritte 510 bis 516 entsprechen den Schritten 408 bis 414 aus Fig. 14.

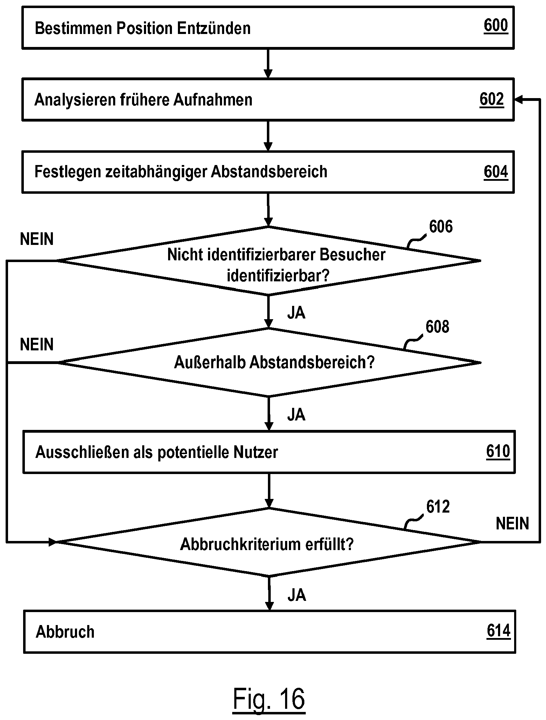

Fig. 16 zeigt ein schematisches Flussdiagramm einer exemplarischen Ausführungsform eines dritten Verfahrens. Das entsprechende Verfahren zeigt in weiteren Details eine Ausführungsform der Analyse gemäß Schritt 406 der Fig. 14 und/oder gemäß den Schritten 406 und/oder 408 in der Fig. 15. Zusätzlich zum Erfassen des Zeitpunkts des Entzündens des pyrotechnischen Gegenstands wird in Schritt 600 die Position des Entzündens erfasst. In Schritt 602 werden eine oder mehrere frühere Aufnahmen analysiert. Hierzu wird unter anderem in Schritt 604 wird für jede der analysierten Aufnahmen jeweils ein zeitabhängiger Abstandsbereich festgelegt, welcher all diejenigen Besucher umfasst, deren Abstand zur Position des Entzündens zum Zeitpunkt der Aufnahme gering genug war, so dass diese potenziellen Nutzer in Frage kommen. Unter Verwendung der in Schritt 604 festgelegten Abstände erfolgt die Analyse der früheren Aufnahmen. In Schritt 606 wird bestimmt, ob ein nicht identifizierbarer Besucher auf einer der früheren Aufnahmen identifizierbar ist. Ist dies der Fall, so wird in Schritt 608 bestimmt, ob der anhand der früheren Aufnahme identifizierbare Besucher sich auf der entsprechenden Aufnahme außerhalb des in Schritt 604 festgelegten Abstandsbereichs befindet. Ist dies der Fall, so wird der entsprechende Besucher in Schritt 610 als potenzieller Nutzer ausgeschlossen. Anschließend wird in Schritt 612 geprüft, ob ein vorgegebenes Abbruchkriterium erfüllt ist. Ist ein solches Abbruchkriterium erfüllt, wird die detaillierte Analyse abgebrochen. Andernfalls wird das Verfahren mit einer früheren Aufnahme in Schritt 602 fortgesetzt. Ist kein weiterer Besucher in Schritt 606 identifizierbar oder befinden sich die identifizierbaren Besucher innerhalb des Abstandsbereichs gemäß der Prüfung in Schritt 608, so wird das Verfahren ebenfalls jeweils in Schritt 612 fortgesetzt. Dies wird so lange durchgeführt, bis ein vordefiniertes Abbruchkriterium erfüllt ist. Ein solches Abbruchkriterium kann beispielsweise darin bestehen, dass nur noch ein nicht identifizierter Besucher als potenzieller Nutzer übrigbleibt, so dass eine frühere Aufnahme erreicht wird, welche einen vordefinierten zeitlichen Höchstabstand vom Zeitpunkt des Entzündens aufweist, oder der zeitabhängige Abstandsbereich den gesamten Aufenthaltsbereich umfasst.

### Bezugszeichenliste

- 100: Veranstaltungsstätte
- 102: Eingang/Ausgang
- 104: Aufenthaltsbereich
- 106: Zugang
- 110: Zugangsbereich
- 112: Ausgangsbereich
- 114: Sperrvorrichtung
- 120: Kamera
- 121: Kamera
- 122: Kamera
- 124: Kamera
- 126: IR-Sensor
- 130: Datenbank
- 132: Anwesenheitsliste
- 134: Ereignis: Entzünden
- 136: Anwesenheitsliste
- 138: Anwesenheitsliste
- 140: Liste potentieller Nutzer
- 142: Erkennungssignal
- 150: Aufnahme Aufenthaltsbereich
- 152: Aufnahme Aufenthaltsbereich
- 154: Aufnahme Aufenthaltsbereich
- 160: Besucher
- 162: nicht identifizierbarer Besucher
- 164: Abstandsbereich
- 200: elektronisches System
- 201: Computersystem
- 202: Speicher
- 204: geschützter Speicherbereich
- 206: privater kryptographischer Schlüssel
- 208: öffentlicher kryptographischer Schlüssel
- 210: Aufnahmen
- 212: Messdaten
- 214: Prozessor
- 216: Programminstruktionen
- 218: Schnittstellen
- 220: Kamera
- 222: Schnittstelle
- 224: Kamera
- 226: Schnittstelle
- 230: IR-Sensor
- 232: Schnittstelle
- 234: IR-Sensor
- 236: Schnittstelle
- 240: Kontrollvorrichtung
- 242: Sperrvorrichtung
- 244: Schnittstelle
- 250: Kommunikationsgerät
- 252: Speicher
- 258: öffentlicher kryptographischer Schlüssel
- 260: Prozessor
- 262: Programminstruktionen
- 264: Display
- 266: Schnittstelle
- 270: Netzwerk
- 280: Servercomputersystem
- 282: Speicher
- 284: geschützter Speicherbereich
- 286: privater kryptographischer Schlüssel
- 288: öffentlicher kryptographischer Schlüssel
- 290: Bildanalyse
- 292: Anwesenheitsliste
- 294: Liste potentieller Nutzer
- 296: Prozessor
- 298: Programminstruktionen
- 300: Schnittstellen
- 302: Datensatz
- 304: Erkennungssignal
- 310: Datenbank
- t_{E}: Zeitpunkt Entzünden
- t_{A}: Zeitpunkt Erstellen Aufnahmen
- t_{A1}: Zeitpunkt Erstellen erste Aufnahmen
- t_{A2}: Zeitpunkt Erstellen zweite Aufnahmen
- Δt₁: Zeitabstand
- Δt₂: Zeitabstand

## Patentansprüche

1. Verfahren zum automatischen Identifizieren ein oder mehrerer potentieller Nutzer eines pyrotechnischen Gegenstands in einer Veranstaltungsstätte (100), wobei die Veranstaltungsstätte (100) zumindest einen Eingang (102) und zumindest einen Ausgang (102) umfasst, wobei die Veranstaltungsstätte (100) ferner zumindest einen räumlich abgegrenzten ersten Aufenthaltsbereich (104) umfasst, welcher über eine begrenzte Anzahl an Zugängen (106) betreten und verlassen werden kann,
wobei die Veranstaltungsstätte (100) ferner ein elektronisches System (200) mit einer Mehrzahl von Überwachungskameras (120, 121, 122, 124, 220, 224) umfasst, welche zur Aufnahme von Bildern im sichtbaren Wellenlängenbereich konfiguriert sind, und mit ein oder mehreren IR-Sensoren (126, 230, 234) zum Erfassen einer Wärmequelle,
wobei das Verfahren umfasst:
• Erfassen von Besuchern beim Betreten der Veranstaltungsstätte (100) durch den zumindest einen Eingang (102) unter Verwendung von ein oder mehreren Überwachungskameras (120, 220, 224),
wobei für jeden der Besucher eine Kombination charakteristischer Attribute erfasst wird, anhand derer der entsprechenden Besucher eindeutig identifiziert werden kann,
wobei für jeden der erfassten Besucher ferner eine eindeutige ID erstellt, den für den entsprechenden Besucher erfassten Attributen zugeordnet und zusammen mit den zugeordneten Attributen in einer Datenbank (130, 310) gespeichert wird,
• wiederholtes Aktualisieren einer Anwesenheitsliste (132, 292) aller erfassten Besucher, welche sich in dem ersten Aufenthaltsbereich (104) aufhalten, wobei das Aktualisieren der Anwesenheitsliste (132, 292) ein Identifizieren aller erfassten Besucher umfasst, welche den ersten Aufenthaltsbereich (104) durch einen der Zugänge (106) betreten oder verlassen,
wobei das Identifizieren eines erfassten Besuchers, welcher den ersten Aufenthaltsbereich (104) betritt oder verlässt, jeweils ein Erfassen der charakteristischen Attribute des entsprechenden Besuchers unter Verwendung von ein oder mehreren Überwachungskameras (122, 220, 224), einen Zugriff auf die Datenbank (130, 310) und ein Bestimmen der den erfassten Attributen zugeordneten ID umfasst,
• Erfassen, wenn der pyrotechnische Gegenstand innerhalb des ersten Aufenthaltsbereichs (104) gezündet wird, unter Verwendung zumindest eines der IR-Sensoren (126, 230, 234),
• auf das Erfassen des Zündens des pyrotechnischen Gegenstands hin, Analysieren von ersten Aufnahmen (152, 210) des ersten Aufenthaltsbereichs (104) und der sich in dem ersten Aufenthaltsbereich (104) aufhaltenden Besucher, welche unmittelbar vor dem Zünden unter Verwendung von ein oder mehreren Überwachungskameras (124, 220, 224) gemacht wurden,
wobei das Analysieren ein Identifizieren aller auf den ersten Aufnahmen (152, 210) identifizierbaren Besucher umfasst, für welche charakteristische Attribute auf den ersten Aufnahmen (152, 210) erkannt werden können und für welche eine den erkannten Attributen zugeordnete ID bestimmt werden kann,
• Bestimmen der IDs aller auf den ersten Aufnahmen (152, 210) nicht identifizierbarer Besucher, welche zum Zeitpunkt der Erstellung der analysierten ersten Aufnahmen (152, 210) gemäß der Anwesenheitsliste (132, 292) in dem ersten Aufenthaltsbereich (104) anwesend waren, wobei das Bestimmen einen Abgleich der von der Anwesenheitsliste (132, 292) umfassten IDs mit den IDs der auf den ersten Aufnahmen (152, 210) identifizierten Besucher umfasst,
• Bestimmen von ein oder mehreren der auf den ersten Aufnahmen (152, 210) nicht identifizierbarer Besucher als die ein oder mehreren potentiellen Nutzer des pyrotechnischen Gegenstands,
• Erkennen der ein oder mehreren potentiellen Nutzer beim Verlassen der Veranstaltungsstätte (100) durch den zumindest einen Ausgang (102) unter Verwendung von ein oder mehreren Überwachungskameras (121, 220, 224), wobei das Erkennen der ein oder mehreren potentiellen Nutzer ein Erfassen der charakteristischen Attribute umfasst, welche den IDs der ein oder mehreren potentiellen Nutzer zugeordnet sind,
• auf ein Erkennen eines der potentiellen Nutzer hin, Erstellen eines Erkennungssignals (142, 304).

2. Verfahren nach Anspruch 1, falls für den tatsächlichen Nutzer des pyrotechnischen Gegenstands auf den ersten Aufnahmen (152, 210) ein oder mehrere charakteristische Attribute erkennbar sind, Ausschließen aller auf den ersten Aufnahmen (152, 210) nicht identifizierbarer Besucher als potentielle Nutzer des pyrotechnischen Gegenstands, deren IDs die für den tatsächlichen Nutzer des pyrotechnischen Gegenstands erkannten Attribute nicht zugeordnet sind, und/oder wobei unter Verwendung zumindest eines der IR-Sensoren (126, 230, 234) die Position innerhalb des Aufenthaltsbereichs (104) bestimmt wird, an welcher der pyrotechnische Gegenstand gezündet wird, wobei alle auf den ersten Aufnahmen (152, 210) nicht identifizierbaren Besucher als potentieller Nutzer des pyrotechnischen Gegenstands ausgeschlossen werden, welche auf ein oder mehreren zweiten Aufnahmen (154, 210) des ersten Aufenthaltsbereichs (104) identifizierbar sind und sich auf den zweiten Aufnahmen (154, 210) außerhalb eines festgelegten Bereichs (164) um die Position befinden, an welcher der pyrotechnische Gegenstand gezündet wird, wobei die zweiten Aufnahmen (154, 210) zeitlich vor den ersten Aufnahmen (152, 210) gemacht wurden.

3. Verfahren nach Anspruch 1, wobei alle auf den ersten Aufnahmen (152, 210) nicht identifizierbarer Besucher als die ein oder mehreren potentiellen Nutzer des pyrotechnischen Gegenstands bestimmt werden.

4. Verfahren nach einem der vorangehenden Ansprüche, wobei das Verfahren ferner umfasst:
• Identifizieren eines Besuchers beim Verlassen des ersten Aufenthaltsbereichs (104) nach dem Zünden des pyrotechnischen Gegenstands, wobei der identifizierte Besucher nicht von der Anwesenheitsliste (132, 292) umfasst ist,
• falls der entsprechende Besucher auf den ersten Aufnahmen (152, 210) nicht identifizierbar ist, Bestimmen des entsprechenden Besuchers als einen der potentiellen Nutzer des pyrotechnischen Gegenstands, oder
wobei das Verfahren ferner umfasst:
• Erfassen eines Besuchers beim Verlassen des ersten Aufenthaltsbereichs (104) nach dem Zünden des pyrotechnischen Gegenstands, für welchen eine Kombination von charakteristischen Attributen erfasst wird, welche nicht von der Datenbank (130, 310) umfasst ist,
• Erstellen einer eindeutigen ID für den entsprechenden Besucher, Zuordnen der ID zu den für den entsprechenden Besucher erfassten Attributen und Speichern der ID zusammen mit den zugeordneten Attributen in der Datenbank (130, 310),
• falls der entsprechende Besucher auf den ersten Aufnahmen (152, 210) nicht identifizierbar ist, Bestimmen des entsprechenden Besuchers als einen der potentiellen Nutzer des pyrotechnischen Gegenstands.

5. Verfahren nach einem der vorangehenden Ansprüche, wobei das Verfahren ferner umfasst:
• nach dem Zünden des pyrotechnischen Gegenstands, Erfassen eines Besuchers beim Verlassen der Veranstaltungsstätte (100) durch den zumindest einen Ausgang (102) unter Verwendung von ein oder mehreren Überwachungskameras (121, 220, 224), für welchen eine Kombination von charakteristischen Attributen erfasst wird, welche nicht von der Datenbank (130, 310) umfasst ist,
• Erstellen eines Erkennungssignals (142, 304), und/oder wobei Ortsinformationen über die aktuellen Positionen der ein oder mehreren potentiellen Nutzer erstellt werden, wobei die Ortsinformationen der einzelnen potentiellen Nutzer jeweils aktualisiert werden, auf ein Erkennen des entsprechendes Nutzer unter Verwendung von einer Überwachungskamera (120, 121, 122, 124, 220, 224), wobei das Erkennen des entsprechenden potentiellen Nutzers ein Erfassen der charakteristischen Attribute umfasst, welche der ID des entsprechenden potentiellen Nutzers zugeordnet ist, und wobei zur Aktualisierung Positionsdaten verwendet werden, welche der entsprechenden Überwachungskamera (120, 121, 122, 124, 220, 224) zugeordnet sind.

6. Verfahren nach einem der vorangehenden Ansprüche, wobei das Erkennungssignals (142, 304) als Information eines oder mehrerer Attribute umfasst, welche der ID des erkannten potentiellen Nutzers zugeordnet sind, und wobei ein oder mehrere der entsprechenden Attribute auf zumindest einem Display angezeigt werden, und/oder
wobei das Erkennungssignal (142, 304) als Information ein von einer der Überwachungskameras (121, 220, 224) aufgenommenes Bild des erkannten potentiellen Nutzers umfasst und wobei das Bild auf zumindest einem Display angezeigt wird, und/oder
wobei das Erkennungssignal (142, 304) an ein oder mehrere mobile Kommunikationsgeräte (250) gesendet wird, welche jeweils ein Display (264) zum Anzeigen der Informationen umfassen, welche das Erkennungssignal (142, 304) umfasst, und/oder
wobei das Erkennungssignal (142, 304) an eine Ausgangskontrollvorrichtung (240) zur Kontrolle des zumindest einen Ausgangs (102) der Veranstaltungsstätte (100) mit einer Sperrvorrichtung (114, 242) zum Sperren des zumindest einen Ausgangs (102) gesendet wird,
wobei auf das Ausgeben des Erkennungssignals (142, 304) hin eine Sperrung des entsprechenden Ausgangs (102) durch die Sperrvorrichtung (114, 242) erfolgt.

7. Verfahren nach einem der vorangehenden Ansprüche, wobei das Verfahren ferner ein Löschen der IDs und der Attribute aus der Datenbank (130, 310) umfasst.

8. Verfahren nach einem der vorangehenden Ansprüche, wobei das Erfassen von Attributen der einzelnen Besucher unter Verwendung einer der Überwachungskameras (120, 121, 122, 124, 220, 224) jeweils getriggert wird, wenn der entsprechende Besucher einen für die entsprechende Überwachungskamera (120, 121, 122, 124, 220, 224) festgelegten Überwachungsbereich (110, 112) betritt, und/oder wobei das Erfassen des Zündens des pyrotechnischen Gegenstands ein Erfassen einer Wärmequelle unter Verwendung des zumindest einen IR-Sensors (126, 230, 234) innerhalb des ersten Aufenthaltsbereichs (104) umfasst, deren Temperatur eine Schwellentemperatur überschreitet.

9. Verfahren nach einem der vorangehenden Ansprüche, wobei das elektronische System (200) ferner ein Computersystem (201) mit einer Schnittstelle zum Senden von Daten über ein Netzwerk (270) umfasst, wobei das Verfahren ferner umfasst:
Senden der Aufnahmen (152, 154, 210) der Überwachungskameras (120, 121, 122, 124, 220, 224) und von Messdaten (212) des zumindest einen IR-Sensors (126, 230, 234) durch das Computersystem (201) über einen kryptographisch gesicherten Kanal des Netzwerks (270) an ein Servercomputersystem (280), welches die Aufnahmen (152, 154, 210) und Messdaten (212) auswertet und ein Datenbanksystem mit der Datenbank (130, 310) umfasst.

10. Verfahren nach einem der Ansprüche 1 bis 8, wobei das elektronische System (200) ferner ein Computersystem (201) umfasst, welches die Aufnahmen (152, 154, 210) der Überwachungskameras (120, 121, 122, 124, 220, 224) und Messdaten (212) des zumindest einen IR-Sensors (126, 230, 234) auswertet, und wobei die Datenbank (130, 310) von einem Datenbanksystem des Computersystems (201) umfasst wird.

11. Verfahren nach einem der vorangehenden Ansprüche, wobei die Veranstaltungsstätte (100) eine Mehrzahl von Aufenthaltsbereichen (104) umfasst und für jeden der Aufenthaltsbereiche (104) jeweils eine Anwesenheitsliste (132, 292) erstellt und wiederholt aktualisiert wird.

12. Servercomputersystem (280) zum automatischen Identifizieren ein oder mehrerer potentieller Nutzer eines pyrotechnischen Gegenstands in einer Veranstaltungsstätte (100), wobei die Veranstaltungsstätte (100) zumindest einen Eingang (102) und zumindest einen Ausgang (102) umfasst, wobei die Veranstaltungsstätte (100) ferner zumindest einen räumlich abgegrenzten ersten Aufenthaltsbereich (104) umfasst, welcher über eine begrenzte Anzahl an Zugängen (106) betreten und verlassen werden kann,
wobei die Veranstaltungsstätte (100) ferner ein elektronisches System (200) mit einer Mehrzahl von Überwachungskameras (120, 121, 122, 124, 220, 224) umfasst, welche zur Aufnahme (152, 154, 210) von Bildern im sichtbaren Wellenlängenbereich konfiguriert sind, und mit ein oder mehreren IR-Sensoren (126, 230, 234) zum Erfassen einer Wärmequelle,
wobei das Servercomputersystem (280) einen Prozessor (296), einen Speicher (282) mit ausführbaren Programminstruktionen (298) und eine Schnittstelle (300) zum Empfangen von Daten über ein Netzwerk (270) umfasst, wobei das Servercomputersystem (280) ferner mit einer Datenbank (130, 310) verbunden ist,
wobei der Prozessor das Servercomputersystem (280) bei einem Ausführen der Programminstruktionen dazu steuert:
• Aufnahmen (210) von den Überwachungskameras (120, 121, 122, 124, 220, 224) über die Schnittstelle und das Netzwerk (270) zu empfangen,
• Besucher auf den Aufnahmen (210) beim Betreten der Veranstaltungsstätte (100) durch den zumindest einen Eingang (102) zu erfassen,
wobei für jeden der Besucher eine Kombination charakteristischer Attribute erfasst wird, anhand derer der entsprechenden Besucher eindeutig identifiziert werden kann,
wobei für jeden der erfassten Besucher ferner eine eindeutige ID erstellt, den für den entsprechenden Besucher erfassten Attributen zugeordnet und zusammen mit den zugeordneten Attributen zur Speicherung an die Datenbank (130, 310) gesendet wird,
• wiederholt eine Anwesenheitsliste (132, 292) aller erfassten Besucher zu aktualisieren, welche sich in dem ersten Aufenthaltsbereich (104) aufhalten, wobei das Aktualisieren der Anwesenheitsliste (132, 292) ein Identifizieren aller erfassten Besucher umfasst, welche auf den Aufnahmen den ersten Aufenthaltsbereich (104) durch einen der Zugänge (106) betreten oder verlassen,
wobei das Identifizieren eines erfassten Besuchers, welcher den ersten Aufenthaltsbereich (104) betritt oder verlässt, jeweils ein Erfassen der charakteristischen Attribute des entsprechenden Besuchers unter Verwendung von ein oder mehreren Überwachungskameras (122, 220, 224), einen Zugriff auf die Datenbank (130, 310) und ein Bestimmen der den erfassten Attributen zugeordneten ID umfasst,
• Messdaten (212) von zumindest einem der IR-Sensoren (126, 230, 234) über die Schnittstelle und das Netzwerk (270) zu empfangen,
• zu erfassen, wenn der pyrotechnische Gegenstand innerhalb des ersten Aufenthaltsbereichs (104) gezündet wird, unter Verwendung der Messdaten (212) von dem zumindest einen IR-Sensor (126, 230, 234),
• auf das Erfassen des Zündens des pyrotechnischen Gegenstands hin, die empfangenen Aufnahmen (152, 210) des ersten Aufenthaltsbereichs (104) und der sich in dem ersten Aufenthaltsbereich (104) aufhaltenden Besucher zu analysieren, welche unmittelbar vor dem Zünden unter Verwendung von den Überwachungskameras (124, 220, 224) gemacht wurden,
wobei das Analysieren ein Identifizieren aller auf den Aufnahmen (152, 210) identifizierbaren Besucher umfasst, für welche charakteristische Attribute auf den Aufnahmen (152, 210) erkannt werden können und für welche eine den erkannten Attributen zugeordnete ID bestimmt werden kann,
• die IDs aller auf den Aufnahmen (152, 210) nicht identifizierbarer Besucher zu bestimmen, welche zum Zeitpunkt der Erstellung der analysierten Aufnahmen (152, 210) gemäß der Anwesenheitsliste (132, 292) in dem ersten Aufenthaltsbereich (104) anwesend waren, wobei das Bestimmen einen Abgleich der von der Anwesenheitsliste (132, 292) umfassten IDs mit den IDs der auf den analysierten Aufnahmen (152, 210) identifizierten Besucher umfasst,
• ein oder mehrerer der auf den Aufnahmen (152, 210) nicht identifizierbarer Besucher als die ein oder mehreren potentiellen Nutzer des pyrotechnischen Gegenstands zu bestimmen,
• ein oder mehreren potentiellen Nutzer auf Aufnahmen (210) beim Verlassen der Veranstaltungsstätte (100) durch den zumindest einen Ausgang (102) zu erkennen, wobei das Erkennen der ein oder mehreren potentiellen Nutzer ein Erfassen der charakteristischen Attribute umfasst, welche den IDs der ein oder mehreren potentiellen Nutzer zugeordnet sind,
• auf ein Erkennen eines der potentiellen Nutzer hin, Erstellen und Senden eines Erkennungssignals (142, 304).

13. Servercomputersystem (280) nach Anspruch 12, wobei das Erkennungssignal (142, 304) an ein oder mehrere mobile Kommunikationsgeräte (250) gesendet wird und/oder
wobei das Erkennungssignal (142, 304) an eine Ausgangskontrollvorrichtung (240) zur Kontrolle des zumindest einen Ausgangs (102) der Veranstaltungsstätte (100) mit einer Sperrvorrichtung (114, 242) zum Sperren des zumindest einen Ausgangs (102) gesendet wird,
wobei die Sperrvorrichtung (114, 242) dazu konfiguriert ist, auf ein Empfangen des Erkennungssignals (142, 304) den entsprechenden Ausgang (102) zu sperren.

14. Elektronisches System (200) zum automatischen Identifizieren ein oder mehrerer potentieller Nutzer eines pyrotechnischen Gegenstands in einer Veranstaltungsstätte (100), wobei die Veranstaltungsstätte (100) zumindest einen Eingang (102) und zumindest einen Ausgang (102) umfasst, wobei die Veranstaltungsstätte (100) ferner zumindest einen räumlich abgegrenzten ersten Aufenthaltsbereich (104) umfasst, welcher über eine begrenzte Anzahl an Zugängen (106) betreten und verlassen werden kann,
wobei das elektronische System (200) eine Mehrzahl von Überwachungskameras (120, 121, 122, 124, 220, 224) umfasst, welche zur Aufnahme von Bildern im sichtbaren Wellenlängenbereich konfiguriert sind, und ein oder mehreren IR-Sensoren (126, 230, 234) zum Erfassen einer Wärmequelle,
wobei das elektronische System (200) ferner ein Computersystem (201) mit einem Prozessor (214) und einem Speicher (202) mit ausführbaren Programminstruktionen (216) umfasst kommunikativ mit einer Datenbank (130, 310) verbunden ist,
wobei der Prozessor bei einem Ausführen der Programminstruktionen folgendes Erkennungsverfahren steuert:
• Erfassen von Besucher beim Betreten der Veranstaltungsstätte (100) durch den zumindest einen Eingang (102) unter Verwendung von ein oder mehreren Überwachungskameras (120, 220, 224),
wobei für jeden der Besucher eine Kombination charakteristischer Attribute erfasst wird, anhand derer der entsprechenden Besucher eindeutig identifiziert werden kann,
wobei für jeden der erfassten Besucher ferner eine eindeutige ID erstellt, den für den entsprechenden Besucher erfassten Attributen zugeordnet und zusammen mit den zugeordneten Attributen zur Speicherung an die Datenbank (130, 310) gesendet wird,
• wiederholt eine Anwesenheitsliste (132, 292) aller erfassten Besucher zu aktualisieren, welche sich in dem ersten Aufenthaltsbereich (104) aufhalten, wobei das Aktualisieren der Anwesenheitsliste (132, 292) ein Identifizieren aller erfassten Besucher umfasst, welche den ersten Aufenthaltsbereich (104) durch einen der Zugänge (106) betreten oder verlassen,
wobei das Identifizieren eines erfassten Besuchers, welcher den ersten Aufenthaltsbereich (104) betritt oder verlässt, jeweils ein Erfassen der charakteristischen Attribute des entsprechenden Besuchers unter Verwendung von ein oder mehreren Überwachungskameras (122, 220, 224), einen Zugriff auf die Datenbank (130, 310) und ein Bestimmen der den erfassten Attributen zugeordneten ID umfasst,
• Erfassen, wenn der pyrotechnische Gegenstand innerhalb des ersten Aufenthaltsbereichs (104) gezündet wird, unter Verwendung zumindest eines der IR-Sensoren (126, 230, 234),
• auf das Erfassen des Zündens des pyrotechnischen Gegenstands hin, Analysieren von ersten Aufnahmen (152, 210) des ersten Aufenthaltsbereichs (104) und der sich in dem ersten Aufenthaltsbereich (104) aufhaltenden Besucher, welche unmittelbar vor dem Zünden unter Verwendung von ein oder mehreren Überwachungskameras (124, 220, 224) gemacht wurden,
wobei das Analysieren ein Identifizieren aller auf den ersten Aufnahmen (152, 210) identifizierbaren Besucher umfasst, für welche charakteristische Attribute auf den ersten Aufnahmen (152, 210) erkannt werden können und für welche eine den erkannten Attributen zugeordnete ID bestimmt werden kann,
• Bestimmen der IDs aller auf den ersten Aufnahmen (152, 210) nicht identifizierbarer Besucher, welche zum Zeitpunkt der Erstellung der analysierten ersten Aufnahmen (152, 210) gemäß der Anwesenheitsliste (132, 292) in dem ersten Aufenthaltsbereich (104) anwesend waren, wobei das Bestimmen einen Abgleich der von der Anwesenheitsliste (132, 292) umfassten IDs mit den IDs der auf den ersten Aufnahmen (152, 210) identifizierten Besucher umfasst,
• Bestimmen von ein oder mehrerer der auf den ersten Aufnahmen (152, 210) nicht identifizierbarer Besucher als die ein oder mehreren potentiellen Nutzer des pyrotechnischen Gegenstands,
• Erkennen der ein oder mehreren potentiellen Nutzer beim Verlassen der Veranstaltungsstätte (100) durch den zumindest einen Ausgang (102) unter Verwendung von ein oder mehreren Überwachungskameras (121, 220, 224), wobei das Erkennen der ein oder mehreren potentiellen Nutzer ein Erfassen der charakteristischen Attribute umfasst, welche den IDs der ein oder mehreren potentiellen Nutzer zugeordnet sind,
• auf ein Erkennen eines der potentiellen Nutzer hin, Erstellen und Senden eines Erkennungssignals (142, 304).

15. Elektronisches System (200) nach Anspruch 14, wobei das Computersystem (201) des elektronischen Systems (200) dazu konfiguriert ist, das Erkennungsverfahren selbst auszuführen.

16. Elektronisches System (200) nach Anspruch 15, wobei das Erkennungssignal (142, 304) an ein oder mehrere mobile Kommunikationsgeräte (250) gesendet wird und/oder
wobei das elektronischen System (200) eine Ausgangskontrollvorrichtung (240) zur Kontrolle des zumindest einen Ausgangs (102) der Veranstaltungsstätte (100) mit einer Sperrvorrichtung (114, 242) zum Sperren des zumindest einen Ausgangs (102) umfasst,
wobei das Erkennungssignal (142, 304) an die Ausgangskontrollvorrichtung (240) gesendet wird,
wobei die Sperrvorrichtung (114, 242) dazu konfiguriert ist, auf ein Empfangen des Erkennungssignals (142, 304) den entsprechenden Ausgang (102) zu sperren.

17. Elektronisches System (200) nach Anspruch 14, wobei das Computersystem (201) des elektronischen Systems (200) ferner eine Schnittstelle zum Senden von Daten über ein Netzwerk (270) umfasst und wobei das Steuern des Verfahrens durch das Computersystem (201) des elektronischen Systems (200) umfasst:
Senden von Aufnahmen (152, 154, 210) der Überwachungskameras (120, 121, 122, 124, 220, 224) und von Messdaten (212) der IR-Sensoren (126, 230, 234) über die Schnittstelle und das Netzwerk (270) an ein Servercomputersystem (280) nach einem der Ansprüche 12 bis 13, wobei das Servercomputersystem (280) das Erkennungsverfahren ausführt.

## Claims

1. A method for automatically identifying one or more potential users of a pyrotechnic article in a venue (100), wherein the venue (100) comprises at least one entrance (102) and at least one exit (102), wherein the venue (100) also comprises at least one spatially delimited first occupancy area (104), which may be entered and left via a limited number of access points (106),
wherein the venue (100) also comprises an electronic system (200) having a plurality of monitoring cameras (120, 121, 122, 124, 220, 224), which are configured to record images in the visible wavelength range, and having one or more IR sensors (126, 230, 234) for detecting a heat source,
wherein the method comprises the steps of:
• detecting visitors upon entry to the venue (100) through the at least one entrance (102) using one or more monitoring cameras (120, 220, 224),
wherein for each of the visitors a combination of characteristic attributes is detected, on the basis of which the corresponding visitor may be uniquely identified,
wherein for each of the detected visitors a unique ID is also created, which is associated with the attributes detected for the corresponding visitor and is stored together with the associated attributes in a database (130, 310),
• repeatedly updating an attendance list (132, 292) of all detected visitors who are located in the first occupancy area (104), wherein the update of the attendance list (132, 292) comprises an identification of all detected visitors who enter or leave the first occupancy area (104) through one of the access points (106),
wherein the identification of a detected visitor who enters or leaves the first occupancy area (104) in each case comprises a detection of the characteristic attributes of the corresponding visitor using one or more monitoring cameras (122, 220, 224), access to the database (130, 310), and a determination of the ID associated with the detected attributes,
• detecting when the pyrotechnic article is ignited within the first occupancy area (104), using at least one of the IR sensors (126, 230, 234),
• upon detecting the ignition of the pyrotechnic article, analysing first recorded images (152, 210) of the first occupancy area (104) and the visitors occupying the first occupancy area (104), which recorded images were taken using one or more monitoring cameras (124, 220, 224) immediately before the ignition, wherein the analysis comprises an identification of all visitors identifiable on the basis of the first recorded images (152, 210), for whom characteristic attributes may be recognised on the basis of the first recorded images (152, 210) and for whom an ID associated with the identified attributes may be determined,
• determining the IDs of all visitors not identifiable on the basis of the first recorded images (152, 210) who were present in the first occupancy area (104) at the time at which the analysed first recorded images (152, 210) were created in accordance with the attendance list (132, 292), wherein the determination comprises a comparison of the IDs comprised by the attendance list (132, 292) with the IDs of the visitors identified on the basis of the first recorded images (152, 210),
• determining one or more of the visitors not identifiable on the basis of the first recorded images (152, 210) as the one or more potential users of the pyrotechnic article,
• identifying the one or more potential users when leaving the venue (100) through the at least one exit (102) using one or more monitoring cameras (121, 220, 224), wherein the identification of the one or more potential users comprises a detection of the characteristic attributes associated with the IDs of the one or more potential users,
• upon identification of one of the potential users, creating an identification signal (142, +).

2. The method according to claim 1, if, for the actual user of the pyrotechnic article one or more characteristic attributes are identifiable on the basis of the first recorded images (152, 210), excluding all visitors not identifiable on the basis of the first recorded images (152, 210) as potential users of the pyrotechnic article, the IDs for whom are not associated with the attributes identified for the actual user of the pyrotechnic article, and/or wherein the position within the occupancy area (104) wherein the pyrotechnic article was ignited is determined using at least one of the IR sensors (126, 230, 234), wherein all visitors not identifiable on the basis of the first recorded images (152, 210) are excluded as potential users of the pyrotechnic article who are identifiable on the basis of one or more second recorded images (154, 210) of the first occupancy area (104) and who in the second recorded images (154, 210) are located outside a defined area (164) around the position where the pyrotechnic article was ignited, wherein the second recorded images (154, 210) were recorded chronologically before the first recorded images (152, 210).

3. The method according to claim 1, wherein all visitors not identifiable on the basis of the first recorded images (152, 210) are determined as the one or more potential users of the pyrotechnic article,

4. The method according to one of the preceding claims, wherein the method also comprises the steps of:
• identifying a visitor when leaving the first occupancy area (104) following the ignition of the pyrotechnic article, wherein the identified visitor is not included in the occupancy list (132, 292),
• if the corresponding visitor is not identifiable on the basis of the first recorded images (152, 210), determining the corresponding visitor as one of the potential users of the pyrotechnic article, or
wherein the method also comprises the steps of:
• detecting a visitor when leaving the first occupancy area (104) following the ignition of the pyrotechnic article for whom a combination of characteristic attributes which is not included by the database (130, 310) is detected,
• creating a unique ID for the corresponding visitor, associating the ID with the attributes detected for the corresponding visitor, and saving the ID together with the associated attributes in the database (130, 310),
• if the corresponding visitor is not identifiable on the basis of the first recorded images (152, 210), determining the corresponding visitor as one of the potential users of the pyrotechnic article.

5. The method according to one of the preceding claims, wherein the method also comprises the steps of:
• following the ignition of the pyrotechnic article, detecting a visitor when leaving the venue (100) through the at least one exit (102) using one or more monitoring cameras (121, 220, 224) for whom a combination of characteristic attributes which is not included by the database (130, 310) is detected,
• creating an identification signal (142, 304), and/or
wherein location information regarding the current position of the one or more potential users is created, wherein the location information of the individual potential users is updated in the event that the corresponding user is identified using a monitoring camera (120, 121, 122, 124, 220, 224), wherein the identification of the corresponding potential user comprises a detection of the characteristic attributes associated with the ID of the corresponding potential user, and wherein position data which are associated with the corresponding monitoring camera (120, 121, 122, 124, 220, 224) are used for the update.

6. The method according to one of the preceding claims, wherein the identification signal (142, 304) comprises, as information, one or more attributes associated with the ID of the identified potential user, and wherein one or more of the corresponding attributes are displayed on at least one display, and/or
wherein the identification signal (142, 304) comprises, as information, an image of the identified potential user recorded by one of the monitoring cameras (121, 220, 224), and wherein the image is displayed on at least one display, and/or
wherein the identification signal (142, 304) is sent to one or more mobile communication devices (250), which each comprise a display (264) for displaying the information which comprises the identification signal (142, 304), and/or
wherein the identification signal (142, 304) is sent to an exit control device (240) for controlling the at least one exit (102) of the venue (100) with a blocking device (114, 242) for blocking the at least one exit (102),
wherein the corresponding exit (102) is blocked by the blocking device (114, 242) in the event that the identification signal (142, 304) is output.

7. The method according to one of the preceding claims, wherein the method also comprises a deletion of the IDs and of the attributes from the database (130, 310).

8. The method according to one of the preceding claims, wherein the detection of the attributes of the individual visitors using one of the monitoring cameras (120, 121, 122, 124, 220, 224) is triggered in each case when the corresponding visitor enters a monitoring area (110, 112) defined for the corresponding monitoring camera (120, 121, 122, 124, 220, 224), and/or wherein the detection of the ignition of the pyrotechnic article includes a detection of a heat source using the at least one IR sensor (126, 230, 234) within the first occupancy area (104), the temperature of which heat source exceeds a threshold temperature.

9. The method according to one of the preceding claims, wherein the electronic system (200) further comprises a computer system (201) having an interface for sending data via a network (270), wherein the method also comprises the step of:
sending the recorded images (152, 154, 210) of the monitoring cameras (120, 121, 122, 124, 220, 224) and of measurement data (212) of the at least one IR sensor (126, 230, 234) by the computer system (201) via a cryptographically secured channel of the network (270) to a server computer system (280) which evaluates the recorded images (152, 154, 210) and measurement data (212) and comprises a database system with the database (130, 310).

10. The method according to one of claims 1 to 8, wherein the electronic system (200) also comprises a computer system (201) which evaluates the recorded images (152, 154, 210) of the monitoring cameras (120, 121, 122, 124, 220, 224) and measurement data (212) of the at least one IR sensor (126, 230, 234), and wherein the database (130, 310) is comprised by a database system of the computer system (201).

11. The method according to one of the preceding claims, wherein the venue (100) comprises a plurality of occupancy areas (104) and creates an attendance list (132, 292) for each of the occupancy areas (104) and updates the attendance lists repeatedly.

12. A server computer system (280) for automatically identifying one or more potential users of a pyrotechnic article in a venue (100), wherein the venue (100) comprises at least one entrance (102) and at least one exit (102), wherein the venue (100) also comprises at least one spatially delimited first occupancy area (104), which may be entered and left via a limited number of access points (106),
wherein the venue (100) also comprises an electronic system (200) having a plurality of monitoring cameras (120, 121, 122, 124, 220, 224), which are configured to record (152, 154, 210) images in the visible wavelength range, and having one or more IR sensors (126, 230, 234) for detecting a heat source,
wherein the server computer system (280) comprises a processor (296), a memory (282) with executable program instructions (298), and an interface (300) for receiving data via a network (270), wherein the server computer system (280) is also connected to a database (130, 310),
wherein, when the program instructions are executed, the processor controls the server computer system (280) to:
• receive recorded images (210) from the monitoring cameras (120, 121, 122, 124, 220, 224) via the interface and the network (270),
• detect visitors on the basis of the recorded images (210) upon entry to the venue (100) through the at least one entrance (102), wherein a combination of characteristic attributes is detected for each of the visitors, on the basis of which the corresponding visitor may be uniquely identified,
wherein for each of the detected visitors a unique ID is also created, which is associated with the attributes detected for the corresponding visitor and is sent for storage together with the associated attributes to the database (130, 310),
• repeatedly update an attendance list (132, 292) of all detected visitors who are located in the first occupancy area (104), wherein the update of the attendance list (132, 292) comprises an identification of all detected visitors who, on the basis of the recorded images, enter or leave the first occupancy area (104) through one of the access points (106),
wherein the identification of a detected visitor who enters or leaves the first occupancy area (104) in each case comprises a detection of the characteristic attributes of the corresponding visitor using one or more monitoring cameras (122, 220, 224), access to the database (130, 310), and a determination of the ID associated with the detected attributes,
• receive measurement data (212) from at least one of the IR sensors (126, 230, 234) via the interface and the network (270),
• detect when the pyrotechnic article is ignited within the first occupancy area (104), using the measurement data (212) of the at least one IR sensor (126, 230, 234),
• upon detection of the ignition of the pyrotechnic article, analyse the received recorded images (152, 210) of the first occupancy area (104) and the visitors occupying the first occupancy area (104), which recorded images were taken using the monitoring cameras (124, 220, 224) immediately before the ignition,
wherein the analysis comprises an identification of all visitors identifiable on the basis of the recorded images (152, 210), for whom characteristic attributes may be recognised on the basis of the recorded images (152, 210) and for whom an ID associated with the identified attributes may be determined,
• determine the IDs of all visitors not identifiable on the basis of the recorded images (152, 210) who were present in the first occupancy area (104) at the time at which the analysed recorded images (152, 210) were created in accordance with the attendance list (132, 292), wherein the determination comprises a comparison of the IDs comprised by the attendance list (132, 292) with the IDs of the visitors identified on the basis of the analysed recorded images (152, 210),
• determine one or more of the visitors not identifiable on the basis of the recorded images (152, 210) as the one or more potential users of the pyrotechnic article,
• identify one or more potential users when leaving the venue (100) through the at least one exit (102) on the basis of recorded images (210), wherein the identification of the one or more potential users comprises a detection of the characteristic attributes associated with the IDs of the one or more potential users,
• upon identification of one of the potential users, creating and sending an identification signal (142, 304).

13. The server computer system (280) according to claim 12, wherein the identification signal (142, 304) is sent to one or more mobile communication devices (250), and/or wherein the identification signal (142, 304) is sent to an exit control device (240) for controlling the at least one exit (102) of the venue (100) with a blocking device (114, 242) for blocking the at least one exit (102),
wherein the blocking device (114, 242) is configured to block the corresponding exit (102) upon receipt of the identification signal (142, 304).

14. An electronic system (200) for automatically identifying one or more potential users of a pyrotechnic article in a venue (100), wherein the venue (100) comprises at least one entrance (102) and at least one exit (102), wherein the venue (100) also comprises at least one spatially delimited first occupancy area (104), which may be entered and left via a limited number of access points (106),
wherein the electronic system (200) comprises a plurality of monitoring cameras (120, 121, 122, 124, 220, 224), which are configured to record images in the visible wavelength range, and one or more IR sensors (126, 230, 234) for detecting a heat source,
wherein the electronic system (200) also comprises a computer system (201) with a processor (214) and a memory (202) with executable program instructions (216) communicatively connected to a database (130, 310),
wherein, when the program instructions are executed, the processor controls the following identification process:
• detecting visitors upon entry to the venue (100) through the at least one entrance (102) using one or more monitoring cameras (120, 220, 224),
wherein for each of the visitors a combination of characteristic attributes is detected, on the basis of which the corresponding visitor may be uniquely identified,
wherein for each of the detected visitors a unique ID is also created, which is associated with the attributes detected for the corresponding visitor and is sent for storage together with the associated attributes to the database (130, 310),
• repeatedly updating an attendance list (132, 292) of all detected visitors who are located in the first occupancy area (104), wherein the update of the attendance list (132, 292) comprises an identification of all detected visitors who enter or leave the first occupancy area (104) through one of the access points (106),
wherein the identification of a detected visitor who enters or leaves the first occupancy area (104) in each case comprises a detection of the characteristic attributes of the corresponding visitor using one or more monitoring cameras (122, 220, 224), access to the database (130, 310), and a determination of the ID associated with the detected attributes,
• detecting when the pyrotechnic article is ignited within the first occupancy area (104), using at least one of the IR sensors (126, 230, 234),
• upon detecting the ignition of the pyrotechnic article, analysing first recorded images (152, 210) of the first occupancy area (104) and the visitors occupying the first occupancy area (104), which recorded images were taken using one or more monitoring cameras (124, 220, 224) immediately before the ignition,
wherein the analysis comprises an identification of all visitors identifiable on the basis of the first recorded images (152, 210), for whom characteristic attributes may be recognised on the basis of the first recorded images (152, 210) and for whom an ID associated with the identified attributes may be determined,
• determining the IDs of all visitors not identifiable on the basis of the first recorded images (152, 210) who were present in the first occupancy area (104) at the time at which the analysed first recorded images (152, 210) were created in accordance with the attendance list (132, 292), wherein the determination comprises a comparison of the IDs comprised by the attendance list (132, 292) with the IDs of the visitors identified on the basis of the first recorded images (152, 210),
• determining one or more of the visitors not identifiable on the basis of the first recorded images (152, 210) as the one or more potential users of the pyrotechnic article,
• identifying the one or more potential users when leaving the venue (100) through the at least one exit (102) using one or more monitoring cameras (121, 220, 224), wherein the identification of the one or more potential users comprises a detection of the characteristic attributes associated with the IDs of the one or more potential users,
• upon identification of one of the potential users, creating and sending an identification signal (142, 304).

15. The electronic system (200) according to claim 14, wherein the computer system (201) of the electronic system (200) is configured to perform the identification process itself.

16. The electronic system (200) according to claim 15, wherein the identification signal (142, 304) is sent to one or more mobile communication devices (250), and/or
wherein the electronic system (200) comprises an exit control device (240) for controlling the at least one exit (102) of the venue (100) with a blocking device (114, 242) for blocking the at least one exit (102),
wherein the identification signal (142, 304) is sent to the exit control device (240), wherein the blocking device (114, 242) is configured to block the corresponding exit (102) upon receipt of the identification signal (142, 304).

17. The electronic system (200) according to claim 14, wherein the computer system (201) of the electronic system (200) also comprises an interface for sending data via a network (270), and wherein the control of the method by the computer system (201) of the electronic system (200) comprises:
sending recorded images (152, 154, 210) of the monitoring cameras (120, 121, 122, 124, 220, 224) and sending measurement data (212) of the IR sensors (126, 230, 234) via the interface and the network (270) to a server computer system (280) according to one of claims 12 to 13, wherein the server computer system (280) performs the identification process.

## Revendications

1. Procédé d'identification automatique d'un ou de plusieurs utilisateurs potentiels d'un objet pyrotechnique dans un lieu évènementiel (100), dans lequel le lieu évènementiel (100) comprend au moins une entrée (102) et au moins une sortie (102), dans lequel le lieu évènementiel (100) comprend en outre au moins une première zone de séjour (104) délimitée dans l'espace, laquelle est accessible et peut être quittée par le biais d'un nombre limité d'accès (106),
dans lequel le lieu évènementiel (100) comprend en outre un système électronique (200) avec une multiplicité de caméras de surveillance (120, 121, 122, 124, 220, 224), lesquelles sont conçues pour la prise d'images dans le domaine de longueurs d'ondes visibles et avec un ou plusieurs capteurs IR (126, 230, 234) pour la détection d'une source de chaleur,
où le procédé comprend :
• la détection de visiteurs lorsqu'ils pénètrent le lieu évènementiel (100) par l'au moins une entrée (102) moyennant l'utilisation d'une ou de plusieurs caméras de surveillance (120, 220, 224),
dans lequel, pour chacun des visiteurs, une combinaison d'attributs caractéristiques est détectée, à l'aide de laquelle le visiteur correspondant peut être identifié de manière spécifique,
dans lequel, pour chacun des visiteurs détectés, un ID spécifique est en outre établi, l'attribut détecté pour le visiteur correspondant est associé et est stocké conjointement avec les attributs associés dans une banque de données (130, 310),
• l'actualisation répétée d'une liste de présence (132, 292) de tous les visiteurs détectés, lesquels séjournent dans la première zone de séjour (104), où l'actualisation de la liste de présence (132, 292) comprend une identification de tous les visiteurs détectés, lesquels ont accès ou quittent par l'un des accès (106) la première zone de séjour (104),
dans lequel l'identification d'un visiteur détecté, lequel accède ou quitte la première zone de séjour (104), comprend respectivement une détection des attributs caractéristiques du visiteur correspondant moyennant l'utilisation d'une ou de plusieurs caméras de surveillance (122, 220, 224), un accès à la banque de données (130, 310) et une détermination de l'ID associé aux attributs détectés,
• la détection du moment où l'objet pyrotechnique est allumé à l'intérieur de la première zone de séjour (104), moyennant l'emploi d'au moins un des capteurs IR (126, 230, 234),
• suite à la détection de l'allumage de l'objet pyrotechnique, l'analyse de premières prises de vues (152, 210) de la première zone de séjour (104) et des visiteurs séjournant dans la première zone de séjour (104), lesquelles ont été effectuées immédiatement avant l'allumage moyennant l'emploi d'une ou de plusieurs caméras de surveillance (124, 220, 224),
dans lequel l'analyse comprend une identification de tous les visiteurs identifiables sur les premières prises de vues (152, 210) pour lesquels des attributs caractéristiques peuvent être reconnus sur les premières prises de vue (152, 210) et pour lesquels un ID associé aux attributs reconnus peut être déterminé,
• la détermination des ID de tous les visiteurs non identifiables sur les premières prises de vue (152, 210), lesquels étaient présents dans la première zone de séjour (104) au moment de l'établissement des premières prises de vue (152, 210) analysées selon la liste de présence (132, 292), où la détermination comprend un rapprochement des ID compris par la liste de présence (132, 292) avec les ID des visiteurs identifiés sur les premières prises de vue (152, 210),
• la détermination d'un ou de plusieurs parmi les visiteurs non identifiables sur les premières prises de vue (152, 210) comme étant un ou plusieurs utilisateurs potentiels de l'objet pyrotechnique,
• la reconnaissance de l'utilisateur ou de plusieurs utilisateurs potentiels lors du départ du lieu évènementiel (100) par l'au moins une sortie (102) moyennant l'emploi d'une ou de plusieurs caméras de surveillance (121, 220, 224), où la reconnaissance de l'utilisateur ou de plusieurs utilisateurs potentiels comprend une détection des attributs caractéristiques, lesquels sont associés aux ID de l'utilisateur ou de plusieurs utilisateurs potentiels,
• suite à une reconnaissance d'un des utilisateurs potentiels, l'établissement d'un signal de reconnaissance (142, 304).

2. Procédé selon la revendication 1, dans le cas où un ou plusieurs attributs caractéristiques sont reconnaissables sur les premières prises de vue (152, 210) pour l'utilisateur de l'objet pyrotechnique effectif, l'exclusion de tous les visiteurs non identifiables sur les premières prises de vue (152, 210) comme étant des utilisateurs potentiels de l'objet pyrotechnique, dont les ID ne sont pas associés aux attributs reconnus pour l'utilisateur effectif de l'objet pyrotechnique, et/ou
dans lequel, moyennant l'emploi d'au moins un des capteurs IR (126, 230, 234), la position est déterminée à l'intérieur de la zone de séjour (104) au niveau de laquelle l'objet pyrotechnique est allumé, où tous les visiteurs non identifiables sur les première prises de vues (152, 210) sont exclus en tant qu'utilisateurs potentiels de l'objet pyrotechnique, lesquels sont identifiables sur une ou plusieurs deuxièmes prises de vue (154, 210) de la première zone de séjour (104) et se trouvent en dehors d'une zone prédéterminée (164) autour de la position à laquelle l'objet pyrotechnique est allumé, où les deuxièmes prises de vue (154, 210) sont effectuées à un moment avant les premières prises de vue (152, 210).

3. Procédé selon la revendication 1, dans lequel tous les visiteurs non identifiables sur les premières prises de vue (152, 210) sont déterminés être l'utilisateur ou les utilisateurs potentiels de l'objet pyrotechnique.

4. Procédé selon l'une des revendications précédentes, le procédé comprenant en outre :
• l'identification d'un visiteur lors du départ de la première zone de séjour (104) après l'allumage de l'objet pyrotechnique, où le visiteur identifié n'est pas compris dans la liste de présence (132, 292),
• dans le cas où le visiteur correspondant n'est pas identifiable sur les premières prises de vue (152, 210), la détermination du visiteur correspondant comme étant un des utilisateurs potentiels de l'objet pyrotechnique, ou
le procédé comprenant en outre :
• la détection d'un visiteur lors du départ de la première zone de séjour (104) après l'allumage de l'objet pyrotechnique pour lequel une combinaison d'attributs caractéristiques est détectée, laquelle n'est pas comprise par la banque de données (130, 310),
• l'établissement d'un ID spécifique pour le visiteur correspondant, l'association de l'ID aux attributs détectés pour le visiteur correspondant et le stockage de l'ID conjointement avec les attributs associés dans la banque de données (130, 310),
• dans le cas où le visiteur correspondant n'est pas identifiable sur les premières prises de vue (152, 210), la détermination du visiteur correspondant comme étant un des utilisateurs potentiel de l'objet pyrotechnique.

5. Procédé selon l'une des revendications précédentes, le procédé comprenant en outre :
• après l'allumage de l'objet pyrotechnique, la détection d'un visiteur lors du départ du lieu évènementiel (100) par l'au moins une sortie (102) moyennant l'emploi d'une ou de plusieurs caméras de surveillance (121, 220, 224) pour lequel une combinaison d'attributs caractéristiques est détectée, laquelle n'est pas comprise dans la banque de données (130, 310),
• l'établissement d'un signal de reconnaissance (142, 304), et/ou dans lequel des informations de lieu concernant les positions actuelles de l'utilisateur ou des utilisateurs potentiels sont établies, où les informations de lieu des utilisateurs potentiels individuels sont respectivement actualisées suite à une reconnaissance de l'utilisateur correspondant moyennant l'emploi d'une caméra de surveillance (120, 121, 122, 124, 220,224), où la reconnaissance de l'utilisateur potentiel correspondant comprend une détection des attributs caractéristiques, auxquels l'ID de l'utilisateur potentiel correspondant est associé, et où des données de position sont employées pour l'actualisation, lesquelles sont associées à la caméra de surveillance (120, 11, 122, 124, 220, 224) correspondante.

6. Procédé selon l'une des revendications précédentes, dans lequel le signal de reconnaissance (142, 304) comprend en tant qu'information un ou plusieurs attributs, lesquels sont associés à l'ID de l'utilisateur potentiel reconnu, et dans lequel un ou plusieurs des attributs correspondants sont affichés sur au moins un affichage, et/ou dans lequel le signal de reconnaissance (142, 304) comprend en tant qu'information une image de l'utilisateur potentiel reconnu prise par une des caméras de surveillance (121, 220, 224) et dans lequel l'image est affichée sur au moins un affichage, et/ou dans lequel le signal de reconnaissance (142, 304) est envoyé à un ou à plusieurs appareils de communication mobiles (250), lesquels comprennent respectivement un affichage (264) pour l'affichage des informations, lesquelles sont comprises par le signal de reconnaissance (142, 304), et/ou
dans lequel le signal de reconnaissance (142, 304) est envoyé à un dispositif de commande de sortie (240) pour la commande de l'au moins une sortie (102) du lieu évènementiel (100) avec un dispositif de blocage (114, 242) pour le blocage de l'au moins une sortie (102),
dans lequel, suite au déclenchement du signal de reconnaissance (142, 304), il y a un blocage de la sortie (102) correspondante par le dispositif de blocage (114, 242).

7. Procédé selon l'une des revendications précédentes, où le procédé comprend en outre un effacement de l'ID et des attributs à partir de la banque de données (130, 310).

8. Procédé selon l'une des revendications précédentes, dans lequel la détection d'attributs des visiteurs individuels est respectivement déclenchée moyennant l'emploi d'une des caméras de surveillance (120, 121, 122, 124, 220, 224) lorsque le visiteur correspondant pénètre dans une zone de surveillance (110, 112) fixée pour la caméra de surveillance (120, 121, 122, 124, 220, 224) correspondante, et/ou
dans lequel la détection de l'allumage de l'objet pyrotechnique comprend une détection d'une source de chaleur moyennant l'emploi d'au moins un capteur IR (126, 230, 234) à l'intérieur de la première zone de séjour (104) dont la température dépasse une température de seuil.

9. Procédé selon l'une des revendications précédentes, dans lequel le système électronique (200) comprend en outre un système informatique (201) avec une interface pour l'envoi de données par le biais d'un réseau (270), le procédé comprenant en outre :
l'envoi des prises de vue (152, 154, 210) des caméras de surveillance (120, 121, 122, 124, 220, 224) et de données de mesure (212) de l'au moins un capteur IR (126, 230, 234) par le système informatique (201) par le biais d'un canal du réseau (270) protégé par cryptographie à un système informatique serveur (280), lequel exploite les prises de vue (152, 154, 210) et les données de mesure (212) et comprend un système de banque de données avec la banque de données (130, 310).

10. Procédé selon l'une des revendications 1 à 8, dans lequel le système électronique (200) comprend en outre un système informatique (201), lequel exploite les prises de vue (152, 154, 210) des caméras de surveillance (120, 121, 122, 124, 220, 224) et les données de mesure (212) de l'au moins un capteur IR (126, 230, 234), et dans lequel la banque de données (130, 310) est comprise par un système de banque de données du système informatique (201).

11. Procédé selon l'une des revendications précédentes, dans lequel le lieu évènementiel (100) comprend une multiplicité de zones de séjour (104) et une liste de présence (132, 292) est respectivement établie et actualisée de manière répétée pour chacune des zones de séjour (104).

12. Système informatique serveur (280) pour l'authentification automatique d'un ou de plusieurs utilisateurs potentiels d'un objet pyrotechnique dans un lieu évènementiel (100), où le lieu évènementiel (100) comprend au moins une entrée (102) et au moins une sortie (102), dans lequel le lieu évènementiel ((100) comprend en outre une première zone de séjour (104) laquelle peut être pénétrée et quittée par le biais d'un nombre limité d'accès (106), dans lequel le lieu évènementiel (100) comprend en outre un système électronique (200) avec une multiplicité de caméras de surveillance (120, 121, 122, 124, 220, 224), lesquelles sont conçues pour la prise d'images (152, 154, 210) dans le domaine de longueurs d'ondes visibles et avec un ou plusieurs capteurs IR (126, 230, 234) pour la détection d'une source de chaleur,
dans lequel le système informatique serveur (280) comprend un processeur (296), une mémoire (282) avec des instructions de programme (298) exécutables et une interface (300) pour la réception de données par le biais d'un réseau (270), dans lequel le système informatique serveur (280) est en outre relié avec une banque de données (130, 310),
dans lequel le processeur commande le système informatique serveur (280) lors de l'exécution des instructions de programme pour qu'il :
• reçoive des prises de vue (210) des caméras de surveillance (120, 121, 122, 124, 220, 224) par le biais de l'interface et du réseau (270),
• détecte des visiteurs sur les prises de vue (210) lors de l'accès au lieu évènementiel (100) par l'au moins une entrée (102),
dans lequel, pour chacun des visiteurs, une combinaison d'attributs caractéristiques est détectée à l'aide de laquelle le visiteur correspondant peut être identifié de manière spécifique,
dans lequel, pour chacun des visiteurs détectés, un ID spécifique est en outre établi, lequel est associé à l'attribut détecté pour le visiteur correspondant et est stocké conjointement avec les attributs associés pour le stockage dans la banque de données (130, 310),
• actualise de manière répétée une liste de présence (132, 292) de tous les visiteurs détectés, lesquels séjournent dans la première zone de séjour (104), où l'actualisation de la liste de présence (132, 292) comprend une identification de tous les visiteurs détectés, lesquels ont accès ou quittent par l'un des accès (106) la première zone de séjour (104),
dans lequel l'identification d'un visiteur détecté, lequel accède ou quitte la première zone de séjour (104), comprend respectivement une détection des attributs caractéristiques du visiteur correspondant moyennant l'utilisation d'une ou de plusieurs caméras de surveillance (122, 220, 224), un accès à la banque de données (130, 310) et une détermination de l'ID associé aux attributs détectés,
• reçoit des données de mesure (212) provenant d'au moins un des capteurs IR (126, 230, 234) par le biais de l'interface et du réseau (270),
• détecte le moment où l'objet pyrotechnique est allumé à l'intérieur de la première zone de séjour (104), moyennant l'emploi des données de mesure (212) de l'au moins un capteur IR (126, 230, 234),
• suite à la détection de l'allumage de l'objet pyrotechnique, analyse les prises de vues (152, 210) reçues de la première zone de séjour (104) et les visiteurs séjournant dans la première zone de séjour (104), lesquelles ont été effectuées immédiatement avant l'allumage moyennant l'emploi d'une ou de plusieurs caméras de surveillance (124, 220, 224),
dans lequel l'analyse comprend une identification de tous les visiteurs identifiables sur les prises de vues (152, 210) pour lesquels des attributs caractéristiques peuvent être reconnus sur les premières prises de vue (152, 210) et pour lesquels un ID associé aux attributs reconnus peut être déterminé,
• détermine les ID de tous les visiteurs non identifiables sur les premières prises de vue (152, 210), lesquels étaient présents au moment de l'établissement des prises de vue (152, 210) analysées selon la liste de présence (132, 292) dans la première zone de séjour (104), où la détermination comprend un rapprochement des ID compris par la liste de présence (132, 292) avec les ID des visiteurs identifiés sur les premières prises de vue (152, 210),
• détermine un ou plusieurs parmi les visiteurs non identifiables sur les prises de vue (152, 210) comme étant un ou plusieurs utilisateurs potentiels de l'objet pyrotechnique,
• reconnait l'utilisateur ou plusieurs utilisateurs potentiels sur des prises de vue (210) lors du départ du lieu évènementiel (100) par l'au moins une sortie (102), où la reconnaissance de l'utilisateur ou de plusieurs utilisateurs potentiels comprend une détection des attributs caractéristiques, lesquels sont associés aux ID de l'utilisateur ou de plusieurs utilisateurs potentiels,
• suite à une reconnaissance d'un des utilisateurs potentiels, établit et envoie un signal de reconnaissance (142, 304).

13. Système informatique serveur (280) selon la revendication 12, dans lequel le signal de reconnaissance (142, 304) est envoyé à un ou à plusieurs appareils de communication mobiles (250), et/ou
dans lequel le signal de reconnaissance (142, 304) est envoyé à un dispositif de commande de sortie (240) pour la commande de l'au moins une sortie (102) du lieu évènementiel (100) avec un dispositif de blocage (114, 242) permettant le blocage de l'au moins une sortie (102),
dans lequel le dispositif de blocage (114, 242) est conçu pour bloquer la sortie (102) correspondante suite à une réception du signal de reconnaissance (142, 304).

14. Système électronique (200) permettant l'identification automatique d'un ou de plusieurs utilisateurs potentiels d'un objet pyrotechnique dans un lieu évènementiel (100), dans lequel le lieu évènementiel (100) comprend au moins une entrée (102) et au moins une sortie (102), dans lequel le lieu évènementiel (100) comprend en outre au moins une première zone de séjour (104) délimitée dans l'espace, laquelle est accessible et peut être quittée par le biais d'un nombre limité d'accès (106),
dans lequel le système électronique (200) comprend une multiplicité de caméras de surveillance (120, 121, 122, 124, 220, 224), lesquelles sont conçues pour la prise d'images dans le domaine de longueurs d'ondes visibles et avec un ou plusieurs capteurs IR (126, 230, 234) pour la détection d'une source de chaleur,
dans lequel le système électronique (200) comprend en outre un système informatique (201) avec un processeur (214) et une mémoire (202) avec des instructions de programme (216) exécutables, relié en communication avec une banque de données (130, 310),
dans lequel le processeur commande le procédé de reconnaissance suivant lors de l'exécution des instructions de programme :
• la détection de visiteurs lors de l'accès au lieu évènementiel (100) par l'au moins une entrée (102), moyennant l'emploi d'une ou de plusieurs caméras de surveillance (120, 220, 224),
dans lequel, pour chacun des visiteurs, une combinaison d'attributs caractéristiques est détectée, à l'aide de laquelle le visiteur correspondant est identifié de manière spécifique,
dans lequel, pour chacun des visiteurs détectés, un ID spécifique est en outre établi, qui est associé à l'attribut détecté pour le visiteur correspondant et est stocké conjointement avec les attributs associés pour le stockage dans la banque de données (130, 310),
• l'actualisation de manière répétée d'une liste de présence (132, 292) de tous les visiteurs détectés, lesquels séjournent dans la première zone de séjour (104), où l'actualisation de la liste de présence (132, 292) comprend une identification de tous les visiteurs détectés, lesquels ont accès ou quittent par l'un des accès (106) la première zone de séjour (104),
dans lequel l'identification d'un visiteur détecté, lequel accède ou quitte la première zone de séjour (104), comprend respectivement une détection des attributs caractéristiques du visiteur correspondant moyennant l'utilisation d'une ou de plusieurs caméras de surveillance (122, 220, 224), un accès à la banque de données (130, 310) et une détermination de l'ID associé aux attributs détectés,
• la détection du moment où l'objet pyrotechnique est allumé à l'intérieur de la première zone de séjour (104), moyennant l'emploi de l'au moins un des capteurs IR (126, 230, 234),
• suite à la détection de l'allumage de l'objet pyrotechnique, l'analyse des premières prises de vues (152, 210) de la première zone de séjour (104) et des visiteurs séjournant dans la première zone de séjour (104), lesquelles ont été effectuées immédiatement avant l'allumage moyennant l'emploi d'une ou de plusieurs caméras de surveillance (124, 220, 224),
dans lequel l'analyse comprend une identification de tous les visiteurs identifiables sur les premières prises de vues (152, 210) pour lesquels des attributs caractéristiques peuvent être reconnus sur les premières prises de vue (152, 210) et pour lesquels un ID associé aux attributs reconnus peut être déterminé,
• la détermination des ID de tous les visiteurs non identifiables sur les premières prises de vue (152, 210), lesquels étaient présents au moment de l'établissement des premières prises de vue (152, 210) analysées selon la liste de présence (132, 292) dans la première zone de séjour (104), où la détermination comprend un rapprochement des ID compris par la liste de présence (132, 292) avec les ID des visiteurs identifiés sur les premières prises de vue (152, 210),
• la détermination d'un ou de plusieurs parmi les visiteurs non identifiables sur les premières prises de vue (152, 210) comme étant un ou plusieurs utilisateurs potentiels de l'objet pyrotechnique,
• la reconnaissance de l'utilisateur ou de plusieurs utilisateurs potentiels lors du départ du lieu évènementiel (100) par l'au moins une sortie (102) moyennant l'emploi d'une ou de plusieurs caméras de surveillance (121, 220, 224), où la reconnaissance de l'utilisateur ou de plusieurs utilisateurs potentiels comprend une détection des attributs caractéristiques, lesquels sont associés aux ID de l'utilisateur ou de plusieurs utilisateurs potentiels,
• suite à une reconnaissance d'un des utilisateurs potentiels, l'établissement et l'envoie d'un signal de reconnaissance (142, 304).

15. Système électronique (200) selon la revendication 14, dans lequel le système informatique (201) du système électronique (200) est conçu pour exécuter lui-même le procédé de reconnaissance.

16. Système électronique (200) selon la revendication 15, dans lequel le signal de reconnaissance (142, 304) est envoyé à un ou à plusieurs appareils de communication mobiles (250), et/ou
où le système électronique (200) comprend un dispositif de commande de sortie (240) pour la commande de l'au moins une sortie (102) du lieu évènementiel (100) avec un dispositif de blocage (114, 242) permettant le blocage de l'au moins une sortie (102),
dans lequel le signal de reconnaissance (142, 304) est envoyé au dispositif de commande de sortie (240),
dans lequel le dispositif de blocage (114, 242) est conçu pour bloquer la sortie (102) correspondante suite à la réception du signal de reconnaissance (142, 304).

17. Système électronique (200) selon la revendication 14, dans lequel le système informatique (201) du système électronique (200) comprend en outre une interface permettant l'envoi de données par le biais d'un réseau (270) et dans lequel la commande du procédé par le système informatique (201) du système électronique (200) comprend :
l'envoi de prises de vue (152, 154, 210) des caméras de surveillance (120, 121, 122, 124, 220, 224) et de données de mesure (212) des capteurs IR (126, 230, 234) à un système informatique serveur (280) selon l'une des revendications 12 à 13 par le biais de l'interface et du réseau (270), où le système informatique serveur (280) exécute le procédé de reconnaissance.
